# EUROPEAN PATENT APPLICATION

(11) **EP 4 660 763 A1**
(43) Date of publication of application: **10.12.2025**
(21) Application number: 24781010.4
(22) Date of filing: 08.02.2024
(51) Int. Cl.: G06F 3/041

(54) **ELECTRONIC DEVICE COMPRISING DISPLAY COMPRISING TOUCH SENSOR FOR PROCESSING CONTACT OF OBJECT**

(30) Priority: 31.03.2023 KR 20230042828; 24.04.2023 KR 20230053360
(71) Applicant: Samsung Electronics Co., Ltd., Suwon-si, Gyeonggi-do 16677 (KR)
(72) Inventor: KWAK, Sanghun, Suwon-si Gyeonggi-do 16677 (KR); KO, Bongjun, Suwon-si Gyeonggi-do 16677 (KR); KIM, Dongchul, Suwon-si Gyeonggi-do 16677 (KR); KIM, Jihwan, Suwon-si Gyeonggi-do 16677 (KR); PARK, Jongdae, Suwon-si Gyeonggi-do 16677 (KR); YOO, Daehyun, Suwon-si Gyeonggi-do 16677 (KR); KIM, Minuk, Suwon-si Gyeonggi-do 16677 (KR)
(74) Representative: Gulde & Partner
(86) International application number: PCT/KR2024/001964
(87) International publication number: WO 2024/205016

(57) **Abstract**

An electronic device is provided. The electronic device comprises: a display including a first region and a second region; a touch sensor including a first portion and a second portion; and a control circuit, wherein the control circuit is configured to: acquire a first value indicating a first contact through the second portion; acquire a second value indicating a second contact through the first portion while the first contact is maintained; on the basis that the first value is less than a first reference value, identify whether the second contact is recognized as a touch input according to a first touch sensitivity; and, on the basis that the first value is greater than or equal to the first reference value, identify whether the second contact is recognized as the touch input according to a second touch sensitivity, which is different from the first touch sensitivity. Various other embodiments are possible.

## Description

### [Technical Field]

The present disclosure relates to an electronic device including a display including a touch sensor for processing a contact of an object.

### [Background Art]

An electronic device may include a touch sensor for executing a defined function in response to a contact of an object on a display. The touch sensor may be included in the display. For example, the touch sensor may identify the contact based on a capacitive method, a resistive method, an infra-red method, an acoustic method, and/or a pressure method.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is provided. According to an embodiment, the electronic device may comprise a display including a first region, and a second region, connected to the first region, bent with respect to the first region. According to an embodiment, the electronic device may a touch sensor including a first portion disposed in the first region and a second portion disposed in the second region. According to an embodiment, the electronic device may control circuitry. The control circuitry may be configured to obtain, via the second portion of the touch sensor, a first value indicating a first contact on the second region. According to an embodiment, the control circuitry may be configured to, while the first contact is maintained, obtain, via the first portion of the touch sensor, a second value indicating a second contact on the first region. According to an embodiment, the control circuitry may be configured to, based on the first value being lower than a first reference value, identify whether recognizing the second contact as a touch input in accordance with a first touch sensitivity. According to an embodiment, the control circuitry may be configured to, based on the first value being higher than or equal to the first reference value, identify whether recognizing the second contact as the touch input in accordance with a second touch sensitivity different from the first touch sensitivity.

An electronic device is provided. According to an embodiment, the electronic device may comprise a first housing. According to an embodiment, the electronic device may comprise a second housing that is movable with respect to the first housing. According to an embodiment, the electronic device may comprise a hinge structure capable of changing to a folded state in which a first direction toward which a surface of the first housing faces is opposite to a second direction toward which a surface of the second housing faces, or an unfolded state in which the first direction is the same as the second direction. According to an embodiment, the electronic device may comprise a display, disposed on the surface of the first housing and the surface of the second housing across the hinge structure, exposed to the outside of the electronic device within the folded state. According to an embodiment, the electronic device may comprise a touch sensor, disposed within the display, including a first portion disposed on the first housing and a second portion connected to the first portion and disposed on the hinge structure and the second housing. According to an embodiment, the electronic device may comprise control circuitry. According to an embodiment, the control circuitry may be configured to obtain a first value indicating a first contact through the first portion. According to an embodiment, the control circuitry may be configured to, while the first contact is maintained, obtain a second value indicating a second contact through the second portion. According to an embodiment, the control circuitry may be configured to, based on the first value being lower than a first reference value, identify whether recognizing the second contact as a touch input in accordance with a first touch sensitivity. According to an embodiment, the control circuitry may be configured to, based on the first value being higher than or equal to the first reference value, identify whether recognizing the second contact as the touch input in accordance with a second touch sensitivity different from the first touch sensitivity.

### [Description of the Drawings]

FIG. 1 is a block diagram of an electronic device in a network environment according to various embodiments.
FIG. 2 is a block diagram of a display module according to various embodiments.
FIG. 3 is a simplified block diagram of an electronic device according to an embodiment.
FIG. 4 illustrates an exemplary electronic device according to an embodiment.
FIG. 5 illustrates an exemplary electronic device according to an embodiment.
FIG. 6 is a graph indicating an exemplary relationship between reference values and a first threshold value for identifying a contact on a display as a touch input.
FIG. 7A illustrates a first state of exemplary control circuitry according to an embodiment.
FIG. 7B illustrates a first state of exemplary control circuitry according to an embodiment.
FIG. 8 illustrates an example of a plurality of nodes of a touch sensor when exemplary control circuitry according to an embodiment is in a first state.
FIG. 9 is a graph indicating an exemplary relationship between reference values and a second threshold value for identifying a contact on a display as a touch input.
FIGS. 10A to 10C illustrate a second state of exemplary control circuitry according to an embodiment.
FIG. 11 illustrates an example of a plurality of nodes of a touch sensor when exemplary control circuitry according to an embodiment is in a second state.
FIG. 12 illustrates a third state of exemplary control circuitry according to an embodiment.
FIG. 13 illustrates an example of a plurality of nodes of a touch sensor when exemplary control circuitry according to an embodiment is in a third state.
FIG. 14 illustrates a charging state of an exemplary electronic device according to an embodiment.
FIG. 15 illustrates a state of an exemplary electronic device according to an embodiment in accordance with an angle.
FIG. 16 illustrates a scanning operation of exemplary control circuitry according to an embodiment.
FIGS. 17A to 17I illustrate a low-power scanning operation of exemplary control circuitry according to an embodiment.
FIG. 18 illustrates an example of an operation of control circuitry according to an embodiment.
FIG. 19A illustrates an example of an operation in which exemplary control circuitry according to an embodiment changes a state of the control circuitry.
FIG. 19B illustrates an example of an operation in which control circuitry according to an embodiment changes a state of the control circuitry.
FIG. 20 illustrates an example of an operation of an exemplary processor according to an embodiment.
FIG. 21 illustrates an example of an operation of an exemplary processor according to an embodiment.
FIG. 22 illustrates an example of an operation in which exemplary control circuitry according to an embodiment scans a touch sensor.
FIG. 23 illustrates a state of an electronic device while exemplary control circuitry according to an embodiment performs a low power scanning.

### [Mode for Invention]

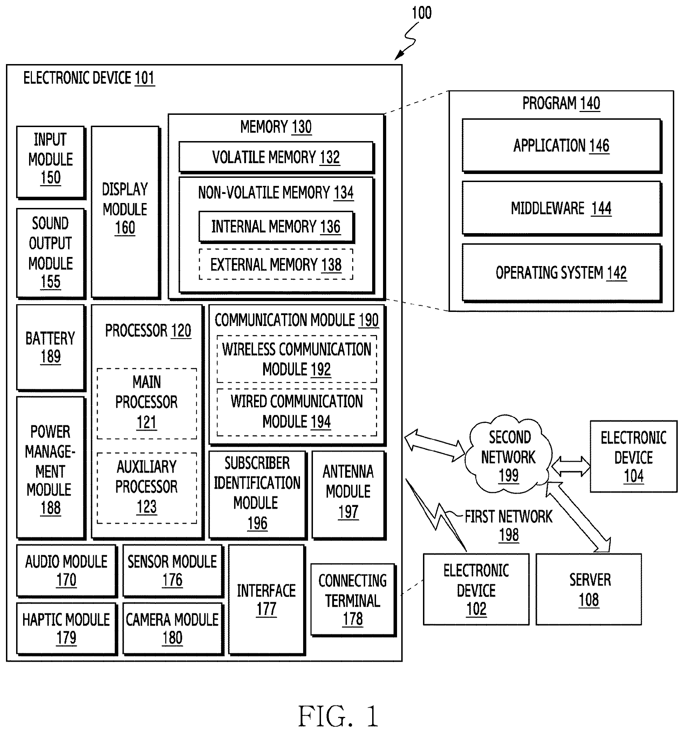

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

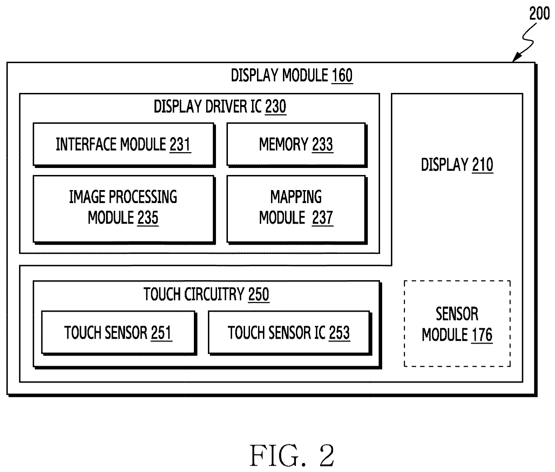

FIG. 2 is a block diagram 200 illustrating the display module 160 according to various embodiments.

Referring to FIG. 2, the display module 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 250 or the sensor module 176 via the interface module 231. The DDI 230 may also store at least part of the received image information in the memory 233, for example, on a frame by frame basis. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data preprocessed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display module 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 250)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display module 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

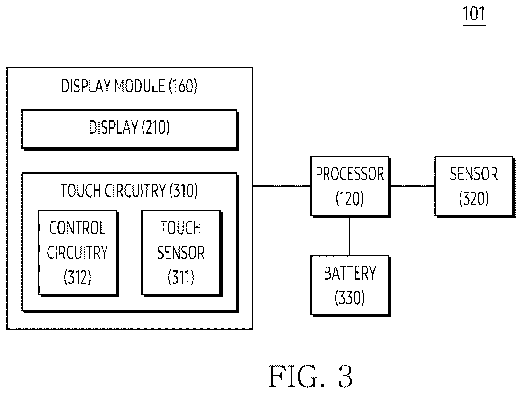

FIG. 3 is a simplified block diagram of an electronic device according to an embodiment.

Referring to FIG. 3, an electronic device 101 according to an embodiment may include a processor 120, a display module 160, a sensor 320, and/or a battery 330 (e.g., the battery 189 of FIG. 1). The display module 160 may include a display 210 and touch circuitry 310 (e.g., the touch circuitry 250 of FIG. 2). The touch circuitry 310 may include a touch sensor 311 (e.g., the touch sensor 251 of FIG. 2) and/or control circuitry 312 (e.g., the touch IC 252 of FIG. 2).

According to an embodiment, the processor 120 may control operations of electronic components in the electronic device 101. The processor 120 may include the main processor 121 and/or the auxiliary processor 123 (e.g., sensor hub processor) illustrated in FIG. 1. The processor 120 may be operably coupled to the display 210, the touch sensor 311, the control circuitry 312, the sensor 320, and/or the battery 330. The processor 120 being operably coupled with and at least one of other components of the electronic device 101 may mean that the other components are directly controlled or indirectly controlled by the processor 120. For example, the processor 120 may control an operation of the touch sensor 311 through the control circuitry 312. For example, the processor 120 may control an operation of the display 210 through a display driver circuit (e.g., the DDI 230 of FIG. 2).

According to an embodiment, the display 210 may be configured to provide visual information. The display 210 may include a plurality of pixels for providing visual information. The display 210 may be exposed to the outside of the electronic device 101. In addition to the function of providing visual information, the display 210 may provide a function of identifying a contact of an object. The display 210 may include touch circuitry 310 for identifying a contact of an object. The processor 120 may provide defined feedback based on identifying a contact of an object on the touch circuitry 310 as a touch input. The contact of the object may indicate that the object is directly in contact with an outer surface of the display 210, and is positioned within a certain distance from the outer surface of the display 210. The touch circuitry 310 may be disposed within the display 210. As the touch circuitry 310 is included within the display 210, the display 210 may be referred to as a touch screen. A region of the display 210 on which the touch circuitry 310 is disposed may substantially correspond to a display region of the display 210 for displaying visual information. However, it is not limited thereto.

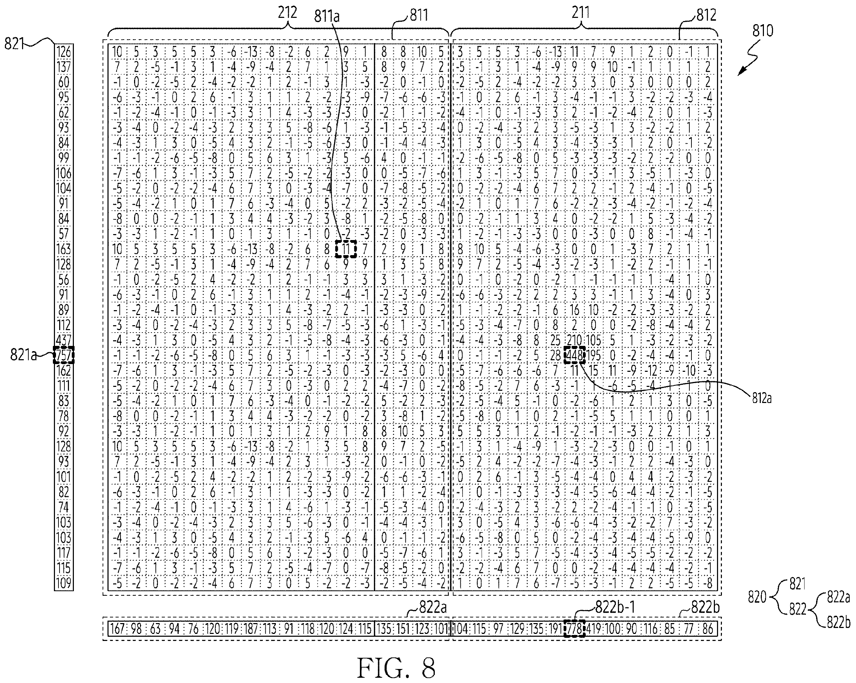

According to an embodiment, the touch sensor 311 may be disposed within the display 210. The touch sensor 311 may obtain values for identifying a contact of an object on the display 210. For example, the touch sensor 311 may obtain the values indicating a change in capacitance due to a contact of an object. For example, the touch sensor 311 may include a plurality of nodes. The plurality of nodes may form one or more rows and one or more columns. The values due to a contact of an object may include a plurality of node values respectively obtained from each of the plurality of nodes. The values due to a contact of an object may include one or more line values indicating each of the one or more rows and the one or more columns formed by the plurality of nodes. The node values may be referred to as mutual values. The one or more line values may be referred to as self-values. Each of the one or more line values may indicate each of the one or more rows and the one or more columns formed by the plurality of nodes. For example, each of the one or more line values may indicate a characteristic of each of the one or more rows and the one or more columns formed by the plurality of nodes. Examples of the plurality of nodes may be described below with reference to FIGS. 8, 11, and 13.

According to an embodiment, the control circuitry 312 may control the touch sensor 311. The control circuitry 312 may process data on values obtained from the touch sensor 311. For example, the control circuitry 312 may generate (or obtain) other data to be provided to the processor 120, based on processing data obtained from the touch sensor 311.

According to an embodiment, the sensor 320 may obtain data from the outside of the electronic device 101. The processor 120 may obtain information on a state of the electronic device 101 or an external environment of the electronic device 101, based on obtaining data through the sensor 320. For example, the sensor 320 may include a motion sensor for obtaining data on an angle of the electronic device 101. For example, the sensor 320 may include a gyro sensor, but is not limited thereto. According to an embodiment, the sensor 320 may be omitted in the electronic device 101, but is not limited thereto.

According to an embodiment, the battery 330 may store power to be supplied to components in the electronic device 101. The battery 330 may supply power to components in the electronic device 101.

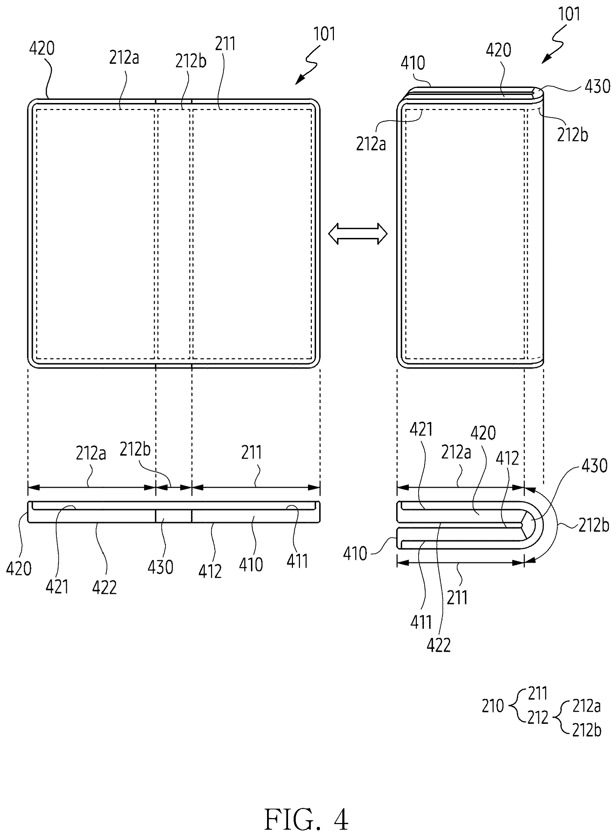

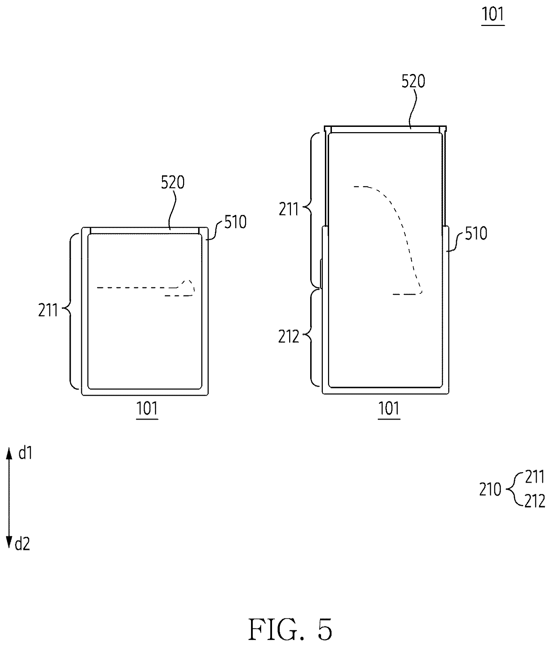

According to an embodiment, the display 210 may be deformable. For example, the display 210 may be referred to as a flexible display. As the display 210 is deformed, a portion of the display 210 may be bent with respect to another portion of the display 210. For example, the display 210 may include a first region and a second region that is at least partially bent with respect to the first region. At least a portion of the second region may face a direction different from a direction toward which the first region faces. For example, the direction toward which the second region faces may be inclined or substantially perpendicular to the direction toward which the first region faces. Each of the first region and the second region may indicate a region of the display 210 capable of displaying visual information. An exemplary structure in which the display 210 is deformed may be described with reference to FIGS. 4 and 5 below.

FIG. 4 illustrates an exemplary electronic device according to an embodiment.

Referring to FIG. 4, an electronic device 101 according to an embodiment may include a first housing 410, a second housing 420, and/or a hinge structure 430.

According to an embodiment, the first housing 410 may be movable with respect to the second housing 420. The first housing 410 may include a first surface 411 and a second surface 412. The first surface 411 may support a display 210. The second surface 412 may be opposite to the first surface 411. For example, a direction toward which the second surface 412 faces may be opposite to a direction toward which the first surface 411 faces.

According to an embodiment, the second housing 420 may be movable with respect to the first housing 410. The second housing 420 may include a third surface 421 and a fourth surface 422. The third surface 421 may support the display 210. The fourth surface 422 may be opposite to the third surface 421. For example, a direction toward which the fourth surface 422 faces may be opposite to a direction toward which the third surface 421 faces.

According to an embodiment, the hinge structure 430 may rotatably connect the first housing 410 and the second housing 420. By the hinge structure 430, the first housing 410 and the second housing 420 may be rotatable with respect to each other. The hinge structure 430 may change a state of the electronic device 101 into an unfolded state in which the direction toward which the first surface 411 faces and the direction toward which the third surface 413 faces are substantially the same, and a folded state in which the direction toward which the first surface 411 faces and the direction toward which the third surface 413 faces are opposite to each other.

According to an embodiment, the display 210 may be disposed on the first housing 410 and the second housing 420 across the hinge structure 430. The display 210 may be disposed on the first surface 411 and the third surface 421 across the hinge structure 430. The display 210 may be deformable by a movement of the second housing 420 with respect to the first housing 410. For example, the display 210 may be exposed to the outside of the electronic device 101, in a folded state of the electronic device 101 in which the direction toward which the first surface 411 faces and the direction toward which the third surface 421 faces are opposite to each other. When the display 210 is exposed to the outside of the electronic device 101 in the folded state of the electronic device 101, the electronic device 101 may be referred to as an out-foldable device. For example, the display 210 may be exposed to the outside of the first housing 410 and the second housing 420, in the folded state of the electronic device 101 in which the direction toward which the first surface 411 faces and the direction toward which the third surface 421 faces are opposite to each other. For example, the display 210 may be exposed to the outside of the first housing 410 and the second housing 420, in the unfolded state of the electronic device 101 in which the direction toward which the first surface 411 faces and the direction toward which the third surface 421 faces are the same. For example, in the folded state of the electronic device 101 in which the direction toward which the first surface 411 faces and the direction toward which the third surface 421 faces are opposite to each other, the second surface 412 may face the fourth surface 422.

According to an embodiment, the display 210 may include a first region 211 and a second region 212. The first region 211 may be disposed on the first housing 410. The first region 211 may be disposed on the first surface 411. The first region 211 may be supported by the first housing 410. A shape of the first region 211 may be maintained independently of a movement of the second housing 420 with respect to the first housing 410. For example, the shape of the first region 211 may not be deformed by the movement of the second housing 420 with respect to the first housing 410. The first region 211 may have a substantially planar shape. According to an embodiment, the second region 212 may be deformed by the movement of the second housing 420 with respect to the first housing 410. At least a portion of the second region 212 may be bent by the movement of the second housing 420 with respect to the first housing 410. For example, the second region 212 may be bent to have a curvature by the movement of the second housing 420 with respect to the first housing 410, but is not limited thereto. For example, the second region 212 may define (or form) substantially one plane with the first region 211, in the unfolded state of the electronic device 101. For example, at least a portion of the second region 212 may be bent with respect to the first region 211 in the folded state of the electronic device 101. In the folded state of the electronic device 101, the direction toward which the second region 212 faces may be different from the direction toward which the first region 211 faces. The second region 212 may be connected to the first region 211. The second region 212 may extend from the first region 211 to the second housing 420 across the hinge structure 430. For example, the second region 212 may be disposed on the hinge structure 430 and the third surface 421. According to an embodiment, a shape of a portion 212a of the second region 212 may be maintained independently of the movement of the second housing 420 with respect to the first housing 410. The portion 212a of the second region 212 may be disposed on the second housing 420. The portion 212a of the second region 212 may be spaced apart from the first region 211 disposed on the first housing 410. Another portion 212b of the second region 212 may be disposed on the hinge structure 430. The other portion 212b of the second region 212 may be disposed between the first region 211 and the portion 212a of the second region 212. The other portion 212b of the second region 212 may connect the first region 211 and the portion 212a of the second region 212. In the folded state of the electronic device 101, a direction toward which the portion 212a of the second region 212 faces may be different from a direction toward which the other portion 212b of the second region 212 faces. According to an embodiment, each of the first region 211, the portion 212a of the second region 212, and the other portion 212b of the second region 212 may be referred to as a display region of the display 210 for providing content, respectively. For example, the first region 211 may be referred to as a first display region, the portion 212a of the second region 212 may be referred to as a second display region, and the other portion 212b of the second region 212 may be referred to as a third display region.

FIG. 5 illustrates an exemplary electronic device according to an embodiment.

Referring to FIG. 5, according to an embodiment, an electronic device 101 may include a first housing 510 and a second housing 520.

According to an embodiment, the first housing 510 may accommodate at least a portion of the second housing 520. The first housing 510 may cover (or surround) at least a portion of the second housing 520.

According to an embodiment, the second housing 520 may be movable with respect to the first housing 510. The second housing 520 may be movable linearly with respect to the first housing 510. The second housing 520 may be slidable with respect to the first housing 510. For example, the second housing 520 may be movable with respect to the first housing 510 along a first direction d1 and/or a second direction d2 opposite to the first direction d1. As the second housing 520 moves along the first direction d1, the second housing 520 may slide outside the first housing 510. As the second housing 520 moves in the second direction d2, the second housing 520 may slide into the inside of the first housing 510. A state of the electronic device 101 may be changed by a movement of the second housing 520 with respect to the first housing 510. The state of the electronic device 101 may include a slide-in state and/or a slide-out state. In the slide-in state of the electronic device 101, the second housing 520 may be movable in the first direction d1, from among the first direction d1 and the second direction d2, with respect to the first housing 510. For example, in the slide-in state of the electronic device 101, the second housing 520 may be movable only in the first direction d1. In the slide-out state of the electronic device 101, the second housing 520 may be movable in the second direction d2, from among the first direction d1 and the second direction d2, with respect to the first housing 510. For example, in the slide-out state of the electronic device 101, the second housing 520 may be movable only in the second direction d2.

According to an embodiment, the display 210 may be disposed on the second housing 510. The display 210 may be movable with respect to the first housing 510, by a movement of the second housing 510 with respect to the first housing 510. For example, the display 210 may be moved from the inside of the first housing 510 to the inside of the first housing 510, by a movement of the second housing 520 in the first direction d1. For example, in the slide-out state of the electronic device 101, a size of the electronic device 101 exposed to the outside of the first housing 510 may be maximum. For example, the display 210 may be moved from the outside of the first housing 510 into the inside of the first housing 510, by a movement of the second housing 520 in the second direction d2. For example, the display 210 may be rolled into the inside of the first housing 510 from the outside of the first housing 510 by a movement of the second housing 520 in the second direction d2.

According to an embodiment, the first region 211 may be disposed on the second housing 520. A shape of the first region 211 may be maintained independently of the movement of the second housing 520 with respect to the first housing 510. The first region 211 may not be deformed by the movement of the second housing 520 with respect to the first housing 510. The first region 211 may be exposed to the outside of the first housing 510 independently of the movement of the second housing 520 with respect to the first housing 510.

According to an embodiment, the second region 212 may be connected to the first region 211. The second region 212 may be deformed by the movement of the second housing 520 with respect to the first housing 510. For example, in the slide-in state of the electronic device 101, the second region 212 may have a bent shape in the first housing 510. The second region 212 may be moved to the outside of the first housing 510 by the movement of the second housing 520 in the first direction d1. In a state of being exposed to the outside of the first housing 510, the second region 212 may define (or form) substantially one plane with the first region 211. The second region 212 may be moved into the inside of the first housing 510, by the movement of the second housing 520 in the second direction d2.

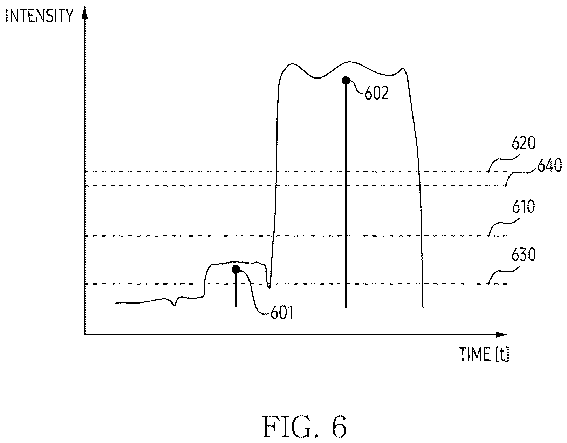

Referring back to FIG. 3, the touch sensor 311 may be disposed in the first region 211 and the second region 212 within the display 210. The touch sensor 311 may extend from the first region 211 to the second region 212 within the display 210. For example, the touch sensor 311 may include a first portion disposed in the first region 211 within the display 210 and a second portion disposed in the second region 212 within the display 210. As the first region 211 and/or the second region 212 are exposed to the outside of the electronic device 101 or are accommodated within the electronic device 101, the first region 211 and/or the second region 212 may be exposed to various environments. As the first region 211 and/or the second region 212 are exposed to various environments, sizes of values indicating contacts on the first region 211 and/or the second region 212, obtained by the touch sensor 311, may be changed. For example, a value indicating a contact on the first region 211 obtained through the first portion of the touch sensor 311 in the first region 211 in a state that a conductor (e.g., a human body and/or a member containing conductive material) is in contact with the second region 212 may be different from a value indicating a contact on the first region 211 obtained through the first portion of the touch sensor 311 in the first region 211 in a sate that a non-conductor is in contact with the second region 212. Since the second region 212 is exposed to the outside of the electronic device 101 or accommodated within the electronic device 101 in accordance with a state of the electronic device 101, a first value obtained through the second portion of the second region 212 may provide data for identifying a state of the control circuitry 312. For example, the control circuitry 312 may identify whether the second region 212 is in contact with a conductor, based on comparing reference values with the first value obtained through the second portion of the second region 212. For example, the reference values may be described with reference to FIG. 6.

Meanwhile, the following operations are described based on the control circuitry 312, but are not limited thereto. For example, at least a portion of the following operations may be performed by the processor 120.

FIG. 6 indicates a relationship between exemplary reference values for identifying a contact on a display as a touch input.

A horizontal axis of a graph of FIG. 6 may indicate time, and a vertical axis of the graph of FIG. 6 may indicate sizes of values of respective values.

Referring to FIG. 6, according to an embodiment, a first reference value 610 may provide a criterion for identifying that a non-conductor is in contact with a first region 211 and/or a second region 212. For example, the control circuitry 312 may identify that a non-conductor is in contact with the second region 212, based on a first value 601 indicating a first contact on the second region 212 being lower than the first reference value 610.

According to an embodiment, a second reference value 620 may provide a criterion for identifying that a conductor is in contact with the first region 211 and/or the second region 212. For example, the control circuitry 312 may identify that a conductor is in contact with the second region 212, based on the first value 601 indicating the first contact on the second region 212 being higher than the second reference value 620. For example, the second reference value 620 may provide a criterion for identifying whether recognizing a contact on the first region 211 and/or the second region 212 by the control circuitry 312 as a touch input before a state of the control circuitry 312 is changed. For example, the second reference value 620 may correspond to a value generally used by the control circuitry 312 to identify a contact on the touch sensor 311 as a touch input.

According to an embodiment, a third reference value 630 may provide a criterion for identifying whether the first value 601 indicating the first contact on the first region 211 and/or the second region 212 is noise. For example, based on identifying that a value indicating a contact on the first region 211 and/or the second region 212 is lower than or equal to the third reference value 630, the control circuitry 312 may identify the value as noise.

According to an embodiment, the control circuitry 312 may obtain a second value 602 indicating a second contact on the first region 211, while the first contact on the second region 212 is maintained. For example, the control circuitry 312 may obtain the first value 601 corresponding to the first contact on the second region 212, and then obtain the second value 602 indicating the second contact on the first region 211. However, it is not limited thereto. For example, the control circuitry 312 may obtain the first value 601 corresponding to the first contact on the second region 212 and the second value 602 indicating the second contact on the first region 211 at substantially the same time. The control circuitry 312 may set (or identify) a touch sensitivity of the first portion in the first region 211, by identifying whether the first value 601 corresponding to the first contact on the second region 212 is lower than the first reference value 610. The touch sensitivity may indicate a degree to which the control circuitry 312 responds to a contact on the touch sensor 311. For example, the control circuitry 312 may identify a contact corresponding to a relatively lower value as a touch input when the touch sensitivity is high, compared to when the touch sensitivity is low.

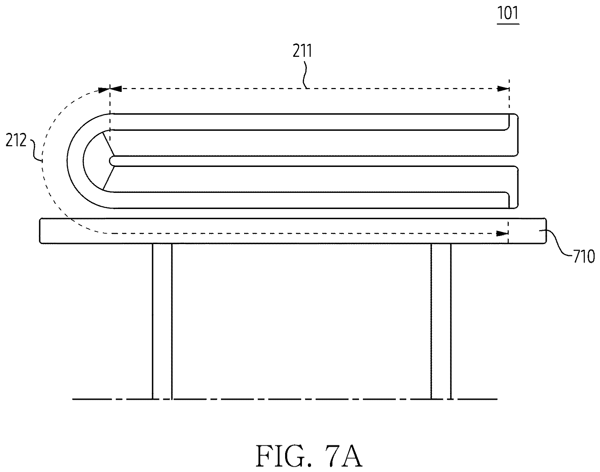

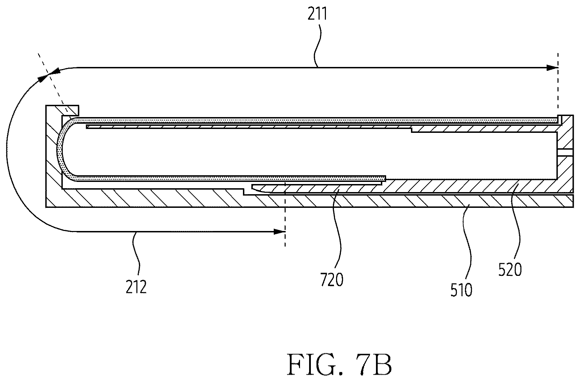

According to an embodiment, the control circuitry 312 may identify whether recognizing the second contact on the first region 211 as a touch input in accordance with a first touch sensitivity, based on the first value 601 indicating the first contact on the second region 212 being lower than the first reference value 610. The control circuitry 312 may be configured to identify whether recognizing the second contact on the first region 211 as a touch input in accordance with a second touch sensitivity different from the first touch sensitivity, based on the first value 601 being higher than or equal to the first reference value 610. The second touch sensitivity may be lower than the first touch sensitivity. For example, the control circuitry 312 may identify that the first contact on the second region 212 is caused by a non-conductor, based on the first value 601 indicating the first contact on the second region 212 being lower than the first reference value 610. For example, the control circuitry 312 may identify whether recognizing the second contact as a touch input by comparing the second value 602 with a first threshold value 640, based on the first value 601 indicating the first contact on the second region 212 being less than the first reference value 610. The first threshold value 640 may be lower than the second reference value 620. The first touch sensitivity may be set based on the first threshold value 640. For example, the control circuitry 312 may identify the second contact as a touch input, based on the second value 602 being higher than the first threshold value 640. For example, the control circuitry 312 may not identify the second contact as a touch input, based on the second value 602 being lower than or equal to the first threshold value 640. For example, the control circuitry 312 may change a state of the control circuitry 312 to a first state of identifying whether recognizing the second contact as a touch input through the first threshold value 640, based on the first value 601 indicating the first contact on the second region 212 being lower than the first reference value 610. In the first state, when another contact distinct from the first contact and the second contact is transferred (caused) on the touch sensor 311, the control circuitry 312 may identify whether recognizing the other contact as a touch input through the first threshold value 640. The first state may be referred to as a low ground state because it may be utilized in a state that there is not enough ground for the touch sensor 311. For example, the first state of the control circuitry 312 may be exemplified through FIG. 7A and FIG. 7B.

FIGS. 7A and 7B illustrate a first state of exemplary electronic device according to an embodiment.

Referring to FIGS. 7A and 7B, according to an embodiment, a first contact on the second region 212 may be transferred (or caused) from a non-conductor outside the electronic device 101 and/or a non-conductor inside the electronic device 101. For example, the first contact on the second region 212 by a non-conductor outside the electronic device 101 and/or a non-conductor inside the electronic device 101 may be obtained through a second portion inside the second region 212, while the second region 212 is deactivated. The second region 212 being deactivated may mean that visual information is not provided through the second region 212, or that pixels within the second region 212 are deactivated, and the expression may be substantially used in the same manner hereinafter unless otherwise stated. When a first contact by a non-conductor outside the electronic device 101 and/or a non-conductor inside the electronic device 101 is transferred on the second region 212, the first region 211 may be activated or deactivated. The first region 211 being activated may mean that visual information is provided through the first region 211 or that pixels within the first region 211 are activated, and the expression may be substantially used in the same manner hereinafter unless otherwise stated. For example, while the first region 211 is activated, a state of the processor 120 may be a sleep state. A function in which the first region 211 is activated within the sleep state of the processor 120 may be referred to as an always on display (AOD) function. However, it is not limited thereto. For example, while the first region 211 is activated, a state of the processor 120 may be a steady state. For example, in the steady-state of the processor 120, the processor 120 may receive steady-state power from a power management integrated circuit (PMIC) within the electronic device 101.

For example, referring to FIG. 7A, the first contact on the second region 212 may be transferred (or caused) from an external object 710, formed of a non-conductive material, positioned outside the electronic device 101. The second region 212 may be contacted to the external object 710 formed of a non-conductive material. The control circuitry 312 may obtain a first value corresponding to a first contact by the external object 710, through a second portion within the second region 212. The control circuitry 312 may change a state of the control circuitry 312 to a first state, based on a first value obtained from the first contact by the external object 710 formed of a non-conductive material being lower than a first reference value (e.g., the first reference value 610 of FIG. 6).

For example, referring to FIG. 7B, the first contact on the second region 212 may be transferred (or caused) from an internal object 720, formed of a non-conductive material, positioned within the electronic device 101. For example, the internal object 720 may be a portion of the first housing 510 and/or a portion of the second housing 520, but is not limited thereto. The second region 212 may be contacted to the internal object 720 formed of a non-conductive material. The control circuitry 312 may obtain a first value corresponding to a first contact by the internal object 720, through a second portion within the second region 212. The control circuitry 312 may change a state of the control circuitry 312 to a first state, based on a first value obtained from the internal object 720 formed of a non-conductive material being lower than a first reference value (e.g., the first reference value 610 of FIG. 6).

For example, after the state of the control circuitry 312 is changed to the first state, the second contact may be transferred on the first region 211 while the first contact is maintained. When the second contact is transferred on the first region 211, the first region 211 may be activated or deactivated. While the first contact is maintained, the control circuitry 312 may obtain a second value indicating the second contact on the first region 211 through the first portion within the first region 211. The control circuitry 312 may identify whether the second value is higher than a first threshold value (e.g., the first threshold value 640 of FIG. 6) under the first state. The control circuitry 312 may identify the second contact as a touch input, based on the second value being higher than the first threshold value under the first state. The control circuitry 312 may not identify the second contact as a touch input, based on the second value being lower than or equal to the first threshold value under the first state.

FIG. 8 illustrates an example of a plurality of nodes of a touch sensor when an exemplary state of control circuitry according to an embodiment is in a first state.

Referring to FIG. 8, FIG. 8 may indicate a plurality of node values 810 caused by a second contact on the first region 211, while a first contact on the second region 212 is maintained when a state of the control circuitry 312 is the first state. Positive values among the plurality of node values 810 may indicate an intensity of a contact of an object on the touch sensor 311. For example, negative values among the plurality of node values 810 may indicate that retransmission is caused from at least a portion of a plurality of nodes by a contact of an object. For example, negative values among the plurality of node values 810 may indicate that noise is caused by a contact of an object. For example, negative values among the plurality of node values 810 may be obtained through at least a portion of the plurality of nodes, when a contact area of an object on the first region 211 and/or the second region 212 is relatively large while a contact intensity of the object on the first region 211 and/or the second region 212 is relatively small.

The plurality of node values 810 may form a plurality of rows and a plurality of columns. A plurality of line values 820 may include a plurality of first line values 821 corresponding to each of the plurality of rows formed by the plurality of node values 810, and a plurality of second line values 822 corresponding to each of the plurality of columns formed by the plurality of node values 810. For example, each of the plurality of first line values 821 may indicate each of the plurality of rows formed by the plurality of node values 810. For example, each of the plurality of second line values 822 may indicate each of the plurality of columns formed by the plurality of node values 810. For example, each of the plurality of first line values 821 may be respectively obtained from node values included in one of the plurality of rows. For example, each of the plurality of second line values 822 may be respectively obtained from node values included in one of the plurality of columns.

According to an embodiment, a first reference value may include a first reference node value (e.g., 100) that is compared with each of the plurality of node values 810, and a first reference line value (e.g., 300) that is compared with each of the plurality of line values 820. For example, a size (e.g., 100) of the first reference node value included in the first reference value compared with each of the plurality of node values 810 may be different from a size (e.g., 300) of the first reference line value included in the first reference value compared with each of the plurality of line values 820.

According to an embodiment, a second reference value may include a second reference node value (e.g., 200) that is compared with each of the plurality of node values 810, and a second reference line value (e.g., 500) that is compared with each of the plurality of line values 820. For example, a size (e.g., 200) of the second reference node value included in the second reference value compared with each of the plurality of node values 810 may be different from a size (e.g., 500) of the second reference line value included in the second reference value compared with each of the plurality of line values 820.

According to an embodiment, a first threshold value may include a first threshold node value (e.g., a value less than 200) compared to each of the plurality of node values 810, and a first threshold line value (e.g., a value less than 500) compared to each of the plurality of line values 820. For example, a size (e.g., a value less than 200) of the first threshold node value compared to each of the plurality of node values 810 may be different from a size (e.g., a value less than 500) of a value indicated by the first threshold line compared to each of the plurality of line values 820.

According to an embodiment, the control circuitry 312 may compare a first reference value with a first value indicating a first contact on a second region 212 included in a plurality of first node values 811. The control circuitry 312 may obtain the plurality of first node values 811 caused by the first contact through a portion of a plurality of nodes positioned within a second portion within the second region 212. For example, the control circuitry 312 may identify a maximum value 811a (e.g., 11) among the plurality of first node values 811. The control circuitry 312 may identify whether the maximum value 811a is lower than a first reference node value (e.g., 100). The control circuitry 312 may change a state of the control circuitry 312 to a first state, based on the maximum value 811a being lower than a first reference value (e.g., 100).

According to an embodiment, the control circuitry 312 may identify whether a second contact is a touch input, by comparing a first threshold value with a second value indicating the second contact on the first region 211 included in the plurality of second node values 812. The control circuitry 312 may obtain a plurality of second node values 812 indicating the second contact, through each of the plurality of nodes positioned within the first portion of the first region 211 while the first contact is maintained. The control circuitry 312 may identify a maximum value 812a (e.g., 448) among the plurality of second node values 812. The control circuitry 312 may identify whether a second contact is a touch input, by comparing the maximum value 812a with a first threshold node value lower than a second reference node value (e.g., 200) under the first state. The control circuitry 312 may identify the second contact as a touch input, based on the maximum value 812a (e.g., 448) higher than a first threshold node value lower than a second reference node value (e.g., 200).

According to an embodiment, the control circuitry 312 may compare a first reference value with a first value indicating a first contact on the second region 212, which is included in the plurality of first line values 821 and a portion 822a of the plurality of second line values 822. The control circuitry 312 may identify, through the plurality of line values 820, whether the first value indicating the first contact on the second region 212 is lower than the first reference value. For example, the control circuitry 312 may identify whether each of the plurality of first line values 821 and a portion 822a of the plurality of second line values 822 obtained by the plurality of nodes within the second region 212 are lower than a first reference line value (e.g., 300) within the first reference value. The control circuitry 312 may identify that a first contact on the first region 211 is caused by a non-conductor, by identifying that each of the plurality of first line values 821 is lower than a first reference line value (e.g., 300) and a portion 822a of the plurality of second line values 822 is lower than a first reference line value (e.g., 300). The control circuitry 312 may change a state of the control circuitry 312 to the first state, based on identifying that the first contact is caused by a non-conductor.

According to an embodiment, the control circuitry 312 may compare a first threshold value with a second value indicating a second contact on the first region 211, which is included within the plurality of first line values 821 and another portion 822b of the plurality of second line values 822. The control circuitry 312 may obtain each of the plurality of first line values 821 and the other portion 822b of the plurality of second line values 822 obtained by the plurality of nodes within the first region 211, while the first contact is maintained. The control circuitry 312 may identify a value 821a (e.g., 757) being higher than a first threshold line value lower than a second reference line value (e.g., 500) among the plurality of first line values 821, under the first state. The control circuitry 312 may identify a value 822b-1 (e.g., 778) being higher than a first threshold line value lower than a second reference line value (e.g., 500) among the other portion 822b of the plurality of second line values 822, under the first state. The control circuitry 312 may identify the second contact as a touch input, based on values 821a and 822b-1 being higher than a first threshold line value lower than a second reference line value (e.g., 500).

As described above, the electronic device 101 according to an embodiment may identify whether the second contact is a touch input, by comparing the second value indicating the second contact on the first region 211 with the first threshold value lower than the second threshold value, based on the first value indicating the first contact on the second region 212 being lower than the first threshold value. For example, when the second contact on the first region 211 is caused by a user's body while the first contact is maintained by a non-conductor on the second region 212, the amount of charge moving to a user's body may be relatively reduced compared to a case where there is no first contact by a non-conductor. When the amount of charge moving to a user's body is reduced, a touch sensitivity of the first region 211 may be relatively reduced. The electronic device 101 according to an embodiment may compensate for the relatively reduced touch sensitivity due to the first contact by a non-conductor, by comparing the second value indicating the second contact with the first threshold value lower than the second reference value, based on identifying that a non-conductor is contacted on the second region 212.

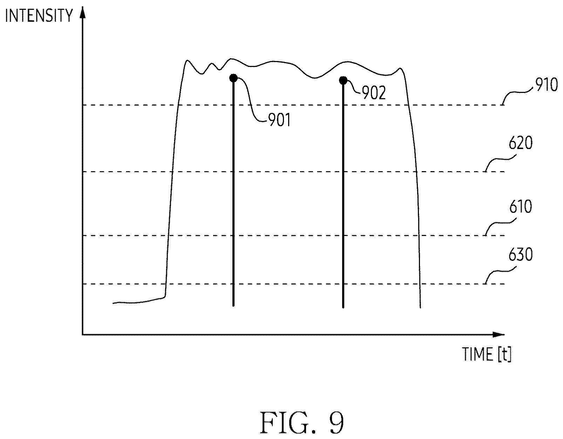

FIG. 9 is a graph indicating an exemplary relationship between reference values and a second threshold value for identifying a contact on a display as a touch input.

A horizontal axis of the graph of FIG. 9 may indicate time, and a vertical axis of the graph of FIG. 9 may indicate sizes of values of respective values.

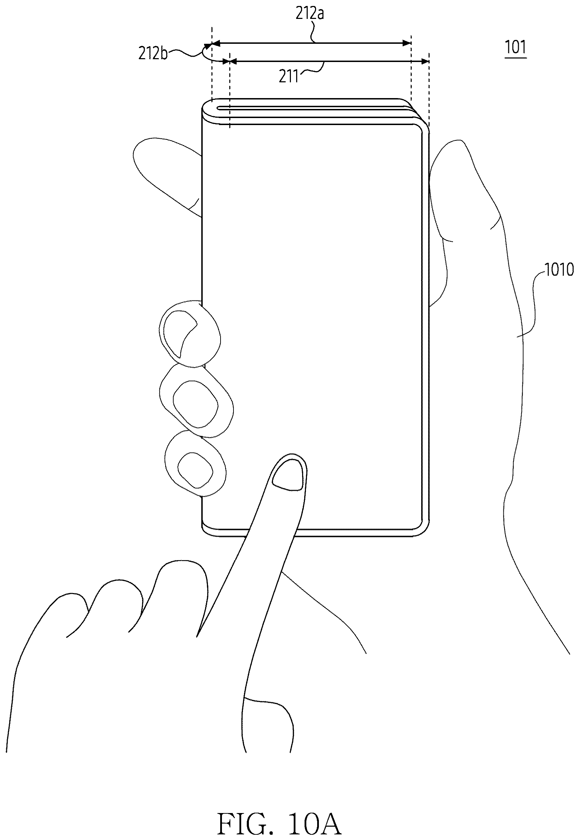

Referring to FIG. 9, according to an embodiment, the control circuitry 312 may identify whether a first value 901 indicating a first contact on the second region 212 being higher than a second reference value 620. The control circuitry 312 may identify that the first contact on the second region 212 is caused by a conductor, based on the first value 901 being higher than the second reference value 620. For example, the control circuitry 312 may identify whether recognizing a second contact as a touch input, through comparing a second value 902 with a second threshold value 910, based on the first value 901 indicating the first contact on the second region 212 being higher than the second reference value 620. The second threshold value 910 may be higher than the second reference value 620. For example, the second threshold value 910 may be higher than the first threshold value 610 of FIG. 6. For example, the control circuitry 312 may identify the second contact as a touch input, based on the second value 902 being higher than the second threshold value 910. For example, the control circuitry 312 may not identify the second contact as a touch input, based on the second value 902 being lower than or equal to the second threshold value 910. For example, the control circuitry 312 may change a state of the control circuitry 312 to a second state of identifying whether recognizing the second contact as a touch input, through the second threshold value 910, based on the first value 901 representing the first contact on the second region 212 being higher than the second reference value 620. In the second state, the control circuitry 312 may identify whether recognizing another contact as a touch input through the second threshold value 910, when the other contact, which is distinct from the first contact and the second contact, is transferred (caused) on the touch sensor 311. The second state may be referred to as a good ground state because it may be utilized in a state where there is sufficient ground for the touch sensor 311. For example, the second state may be utilized in a state where a user has gripped at least a portion of the electronic device 101. For example, the second state of the control circuitry 312 may be exemplified through FIGS. 10A to 10C.

FIGS. 10A to 10C illustrate a second state of exemplary control circuitry according to an embodiment.

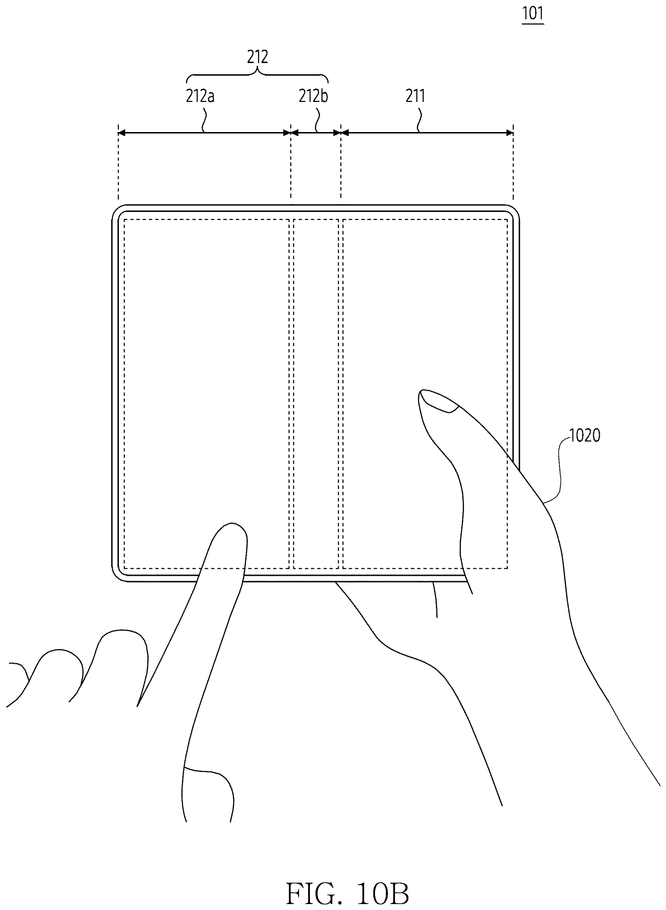

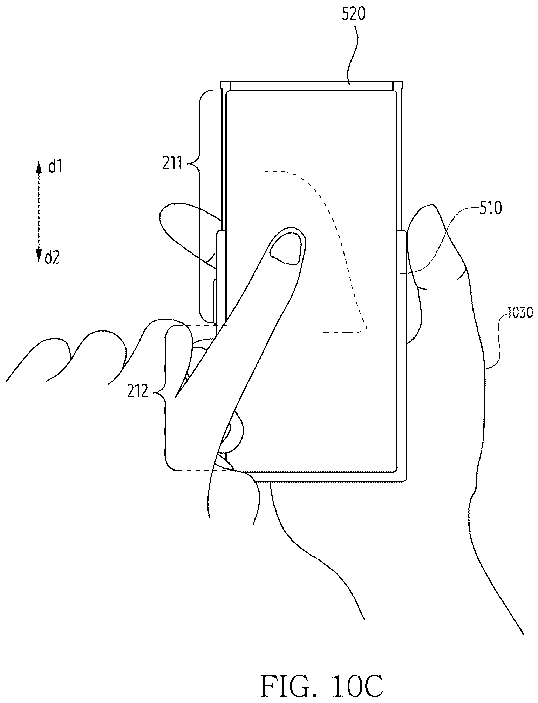

Referring to FIGS. 10A, 10B, and 10C, according to an embodiment, a first contact on a second region 212 may be transferred (or caused) from a conductor outside an electronic device 101 and/or a conductor inside the electronic device 101. For example, the first contact on the second region 212 by a conductor outside the electronic device 101 and/or a conductor inside the electronic device 101 may be obtained through a second portion within the second region 212 while the second region 212 is deactivated. For example, the first contact on the second region 212 by a conductor outside the electronic device 101 and/or a conductor inside the electronic device 101 may be obtained through a second portion within the second region 212 while the second region 212 is activated. For example, when the first contact by a conductor outside the electronic device 101 and/or a non-conductor inside the electronic device 101 is transferred on the second region 212, the first region 211 may be activated or deactivated.

For example, referring to FIG. 10A, the first contact on the second region 212 may be transferred (or caused) from a body 1010 outside the electronic device 101, in a folded state of the electronic device 101. For example, in the folded state of the electronic device 101, the first contact by the user's body 1010 may occur on at least one of a portion 212a of the second region 212 and another portion 212b of the second region 212. The control circuitry 312 may obtain a first value corresponding to the first contact by the body 1010 through a second portion within at least one of the portion 212a of the second region 212 and the other portion 212b of the second region 212, in the folded state of the electronic device 101. The control circuitry 312 may change a state of the control circuitry 312 to a second state, based on the first value obtained from the first contact by the body 1010 being higher than a second reference value (e.g., the second reference value 620 of FIG. 9).

For example, referring to FIG. 10B, the first contact on the second region 212 may be transferred (or caused) from a body 1020 outside the electronic device 101, in an unfolded state of the electronic device 101. For example, in the unfolded state of the electronic device 101, a first contact of a user may occur on at least one of a portion 212a of the second region 212 and another portion 212b of the second region 212. The control circuitry 312 may obtain a first value corresponding to the first contact by the body 1020 through a second portion within at least one of the portion 212a of the second region 212 and the other portion 212b of the second region 212, in the unfolded state of the electronic device 101. The control circuitry 312 may change a state of the control circuitry 312 to a second state, based on the first value obtained from the first contact by the body 1020 being higher than a second reference value (e.g., the second reference value 620 of FIG. 9), in the unfolded state of the electronic device 101.

For example, referring to FIG. 10C, the first contact on the second region 212 may be transferred (or caused) from a body 1030 outside the electronic device 101 while a second housing 520 moves with respect to a first housing 510. However, it is not limited thereto. For example, the first contact on the second region 212 may be transferred (or caused) from a body 1030 outside the electronic device 101, while the second housing 520 moves with respect to the first housing 510 in a first direction d1 or a second direction d2. The control circuitry 312 may change a state of the control circuitry 312 to a second state, based on a first value obtained from the first contact on the second region 212 by the body 1030 being higher than a second reference value (e.g., the second reference value 620 of FIG. 9).

For example, after the state of the control circuitry 312 is changed to the second state, the second contact may be transferred on the first region 211 while the first contact is maintained. When the second contact is transferred on the first region 211, the first region 211 may be activated or deactivated. The control circuitry 312 may obtain a second value indicating a second contact on the first region 211, through a first portion within the first region 211, while the first contact is maintained, under the second state. The control circuitry 312 may identify whether the second value is higher than a second threshold value (e.g., the second threshold value 910 of FIG. 9) under the second state. The control circuitry 312 may identify the second contact as a touch input, based on the second value being higher than the second threshold value, under the second state. The control circuitry 312 may not identify the second contact as a touch input, based on the second value being lower than or equal to the second threshold value, under the second state.

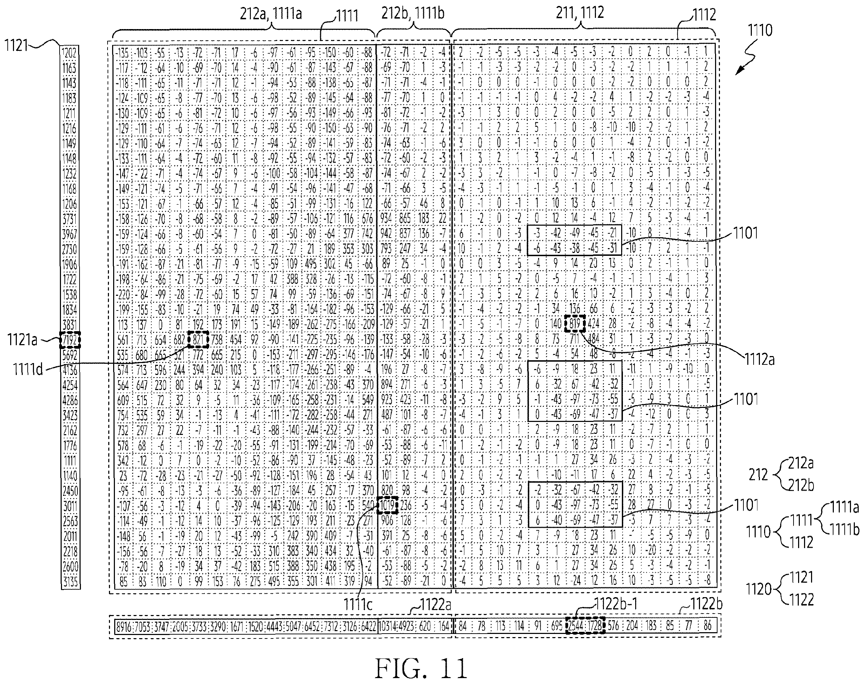

FIG. 11 illustrates an example of a plurality of nodes of a touch sensor when an exemplary electronic device according to an embodiment is in a second state.

Referring to FIG. 11, in FIG. 11, positive values among a plurality of node values 1110 caused by a second contact on a first region 211, while a first contact on a second region 212 is maintained, when a state of the control circuitry 312 is a second state, may indicate an intensity of a contact of an object on a touch sensor 311. For example, negative values among the plurality of node values 1110 may indicate that retransmission is caused from at least a portion of a plurality of nodes in accordance with a contact of an object. For example, negative values among the plurality of node values 1110 may indicate that noise is caused in accordance with a contact of an object. For example, negative values among the plurality of node values 1110 may be obtained through at least a portion of the plurality of nodes, when a contact area of an object on the first region 211 and/or the second region 212 is relatively large while a contact intensity of the object on the first region 211 and/or the second region 212 is relatively small. For example, the regions 1101 may indicate that noise is caused in a first portion within the first region 211 by a first contact on the second region 212.

It may indicate a plurality of node values 1110. The plurality of node values 1110 may form a plurality of rows and a plurality of columns. A plurality of line values 1120 may include a plurality of first line values 1121 corresponding to each of the plurality of rows formed by the plurality of node values 1110, and a plurality of second line values 1122 corresponding to each of the plurality of columns formed by the plurality of node values 1110. For example, each of the plurality of first line values 1121 may indicate each of the plurality of rows formed by the plurality of node values 1110. For example, each of the plurality of second line values 1122 may indicate each of the plurality of columns formed by the plurality of node values 1110. For example, each of the plurality of first line values 1121 may be obtained from node values included in one of the plurality of rows. For example, each of the plurality of second line values 1122 may be obtained from node values included in one of the plurality of columns.

According to an embodiment, a first reference value may include a first reference node value (e.g., 100) that is compared with each of the plurality of node values 1110, and a first reference line value (e.g., 300) that is compared with each of the plurality of line values 1120. For example, a size (e.g., 100) of the first reference node value that is compared with each of the plurality of node values 1110 may be different from a size (e.g., 300) of the first reference line value that is compared with each of the plurality of line values 1120.

According to an embodiment, a second reference value may include a second reference node value (e.g., 200) that is compared to each of the plurality of node values 1110, and a second reference line value (e.g., 500) that is compared to each of the plurality of line values 1120. For example, a size (e.g., 200) of the second reference node value that is compared to each of the plurality of node values 1110 may be different from a size (e.g., 500) of the second reference line value that is compared to each of the plurality of line values 1120.

According to an embodiment, a second threshold value may include a second threshold node value (e.g., a value greater than 200) compared to each of the plurality of node values 1110, and a second threshold line value (e.g., a value greater than 500) compared to each of the plurality of line values 1120. For example, a size (e.g., a value greater than 200) of the second threshold node value compared with each of the plurality of node values 1110 may be different from a size (e.g., a value greater than 500) of the second threshold line value compared with each of the plurality of line values 1120.

According to an embodiment, the control circuitry 312 may compare a second reference value with a first value indicating a first contact on a second region 212 included in a plurality of first node values 1111. The control circuitry 312 may obtain the plurality of first node values 1111 caused by the first contact, through a portion of a plurality of nodes positioned within a second portion of the second region 212. For example, the control circuitry 312 may obtain a portion 1111a of the plurality of first node values 1111 caused by the first contact, corresponding to a portion 212a of the second region 212. For example, the control circuitry 312 may obtain another portion 1111b of the plurality of first node values 1111 caused by the first contact, corresponding to another portion 212b of the second region 212.

For example, the control circuitry 312 may identify a maximum value 1111c (e.g., 1019) of the plurality of first node values 1111 corresponding to the second region 212. The control circuitry 312 may identify whether a maximum value 1111c (e.g., 1019) is higher than a second reference node value (e.g., 200) within the second reference value. The control circuitry 312 may change a state of the control circuitry 312 to a second state, based on whether a maximum value 1111c is higher than a second reference node value (e.g., 200).

For example, the control circuitry 312 may identify a maximum value 1111d (e.g., 821) among a portion 1111a of the plurality of first node values 1111 corresponding to the portion 212a of the second region 212. The control circuitry 312 may identify whether a maximum value 1111d (e.g., 821) is higher than a second reference node value (e.g., 200) within the second reference value. The control circuitry 312 may change a state of the control circuitry 312 to a second state, based on whether a maximum value 1111d is higher than a second reference node value (e.g., 200).

For example, the control circuitry 312 may identify a maximum value 1111c (e.g., 1019) among another portion 1111b of the plurality of first node values 1111 corresponding to another portion 212b of the second region 212. The control circuitry 312 may identify whether a maximum value 1111c (e.g., 1019) is higher than a second reference node value (e.g., 200) within the second reference value. The control circuitry 312 may change a state of the control circuitry 312 to a second state, based on whether a maximum value 1111c (e.g., 1019) is higher than a second reference node value (e.g., 200).

According to an embodiment, the control circuitry 312 may identify whether the second contact is a touch input, by comparing a second threshold value with a second value indicating a second contact on a first region 211 included in the plurality of second node values 1112. The control circuitry 312 may obtain a plurality of second node values 1112 indicating the second contact, through each of a plurality of nodes positioned within a first portion within the first region 211, while the first contact is maintained. The control circuitry 312 may identify a maximum value 1112a (e.g., 819) among the plurality of second node values 1112. The control circuitry 312 may identify whether the second contact is a touch input, by comparing the maximum value 1112a (e.g., 819) with the second threshold node value within the second threshold value higher than the second reference node value (e.g., 200) under the second state. The control circuitry 312 may identify the second contact as a touch input, based on the maximum value 1112a (e.g., 819) being higher than the second threshold node value higher than the second reference node value (e.g., 200).

According to an embodiment, the control circuitry 312 may compare a second reference value with a first value indicating a first contact on the second region 212 included within a plurality of first line values 1121 and a portion 1122a of the plurality of second line values 1122. The control circuitry 312 may identify, through the plurality of line values 1120, whether the first contact on the second region 212 is higher than the second reference value. For example, the control circuitry 312 may identify whether each of the plurality of first line values 1121 and the portion 1122a of the plurality of second line values 1122 obtained by the plurality of nodes within the second region 212 are higher than a second reference line value (e.g., 500) within a second reference value (e.g., 500). The control circuitry 312 may identify that the first contact on the first region 211 is caused by a conductor, by identifying that each of the plurality of first line values 1121 and the portion 1122a of the plurality of second line values 1122 obtained by the plurality of nodes within the second region 212 are higher than a second reference line value (e.g., 500). The control circuitry 312 may change a state of the control circuitry 312 to a second state, based on identifying that the first contact is caused by a conductor.

According to an embodiment, the control circuitry 312 may compare a second threshold value with a second value indicating a second contact on the first region 211 included within a plurality of first line values 1121, and another portion 1122b of the plurality of second line values 1122. The control circuitry 312 may obtain, while the first contact is maintained, each of the plurality of first line values 1121, and the other portion 1122b of the plurality of second line values 1122 obtained by the plurality of nodes within the first region 211. The control circuitry 312 may identify a value 1121a being higher than a second threshold line value higher than a second reference line value (e.g., 500) among the plurality of first line values 1121, under the second state. The control circuitry 312 may identify a value 1122b-1 being higher than a second threshold line value higher than a second line reference value (e.g., 500) among the plurality of second line values 1122, under the second state. The control circuitry 312 may identify the second contact as a touch input, based on values 1121a and 1122b-1 being higher than a second threshold line value higher than the second reference value (e.g., 500).

As described above, the electronic device 101 according to an embodiment may identify whether the second contact is a touch input, by comparing a second value indicating a second contact on the first region 211 with a second threshold value higher than the second threshold value, based on a first value indicating a first contact on the second region 212 being higher than the second threshold value. For example, when the second contact is caused by a user's body on the first region 211 while the first contact by a conductor on the second region 212 is maintained, a size of the plurality of second node values 1112 obtained by the second contact may relatively increase compared to a case where there is no first contact by a conductor. When a size of the plurality of second node values 1112 relatively increase, the control circuitry 312 may recognize the second contact, which is not intended by the user, as a touch input. In other words, when a size of the plurality of second node values 1120 relatively increase, a touch sensitivity of the first region 211 may excessively increase. The electronic device 101 according to an embodiment may compensate for the touch sensitivity relatively increased by a conductor, by comparing the second value indicating the second contact with the second threshold value higher than the second reference value, based on identifying that a conductor is contacted on the second region 212.

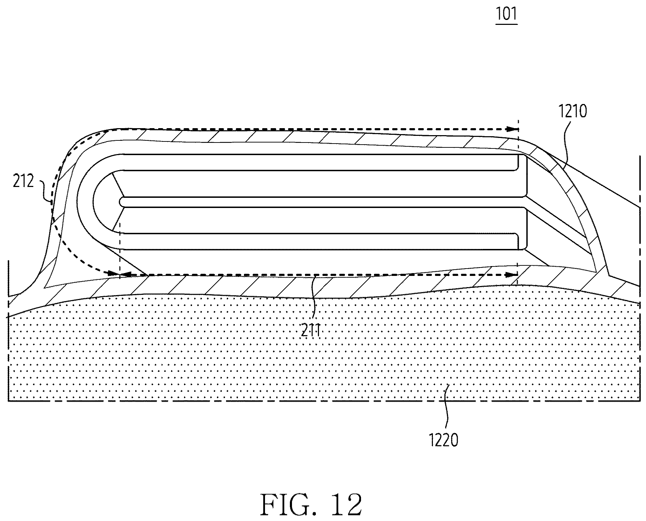

FIG. 12 illustrates a third state of exemplary control circuitry according to an embodiment.

Referring to FIG. 12, a first contact on a second region 212 may be transferred (or caused) from a non-conductor 1210 (e.g., clothing), in a state that the electronic device 101 is accommodated in a user's pocket (or bag). A second contact on a first region 211 may be transferred (or caused) from a body 1220 outside the electronic device 101 through a non-conductor 1210 (e.g., fabric) in a state that the electronic device 101 is accommodated in a user's pocket (or bag). For example, the second contact on the first region 211 by the body 1220 covered by the non-conductor 1210 may be obtained through a first portion within the first region 211 while the first region 211 is deactivated. For example, the second contact on the first region 211 by the body 1220 covered by the non-conductor 1210 may be obtained through a first portion within the first region 211 while the first region 211 is activated. For example, when the second contact by the body 1220 covered by the non-conductor 1210 is transferred on the first region 211, the second region 212 may be activated or deactivated.

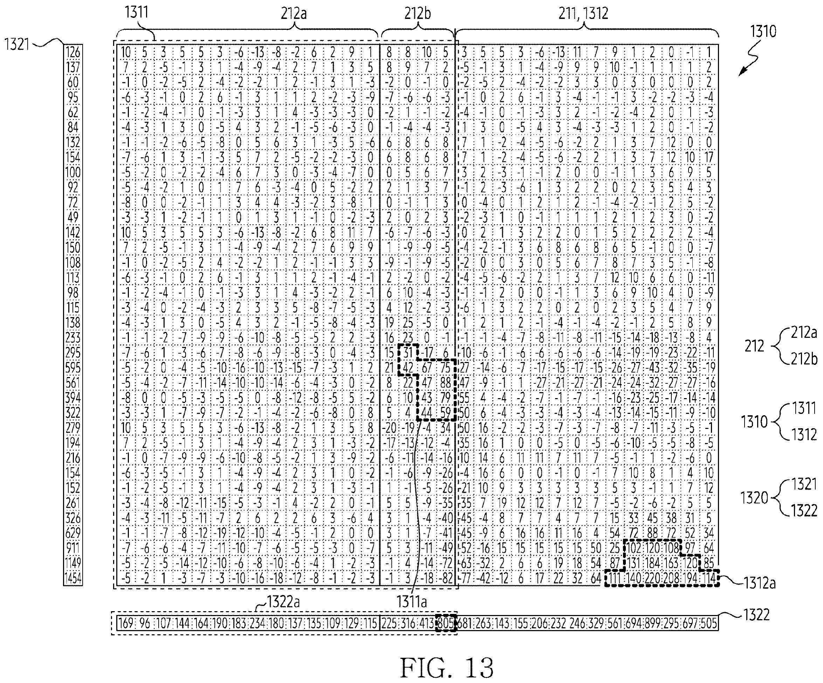

When the electronic device 101 is accommodated in a pocket (or bag), malfunction of the electronic device 101 may be caused by the second contact on the first region 211 that is not intended by the user. An operation of the control circuitry 312 to reduce the malfunction of the electronic device 101 when the electronic device 101 is accommodated in a pocket (or bag) may be explained through FIG. 13.

FIG. 13 illustrates an example of a plurality of nodes of a touch sensor when exemplary control circuitry according to an embodiment is in a third state.

FIG. 13 may indicate a plurality of node values 1310 caused by a second contact on the first region 211, while a first contact on the second region 212 is maintained, when a state of the control circuitry 312 is the third state. Positive values among the plurality of node values 1310 may indicate an intensity of a contact of an object on the touch sensor 311. For example, negative values among the plurality of node values 1310 may indicate that retransmission is caused from at least a portion of the plurality of nodes in accordance with a contact of an object. For example, negative values among the plurality of node values 1310 may indicate that noise is caused by a contact of an object. For example, negative values among the plurality of node values 1310 may be obtained through at least a portion of the plurality of nodes, when a contact area of an object on the first region 211 and/or the second region 212 is relatively large while a contact intensity of the object on the first region 211 and/or the second region 212 is relatively small. The plurality of node values 1310 may include a plurality of first node values 1311 corresponding to the second region 212, and a plurality of second node values 1312 corresponding to the first region 211.

The plurality of node values 1310 may form a plurality of rows and a plurality of columns. The plurality of line values 1320 may include a plurality of first line values 1321 corresponding to each of the plurality of rows formed by the plurality of node values 1310, and a plurality of second line values 1322 corresponding to each of the plurality of columns formed by the plurality of node values 1310. For example, each of the plurality of first line values 1321 may indicate each of the plurality of rows formed by the plurality of node values 1310. For example, each of the plurality of second line values 1322 may indicate each of the plurality of columns formed by the plurality of node values 1310. For example, each of the plurality of first line values 1321 may be obtained from node values included in one of the plurality of rows. For example, each of the plurality of second line values 1322 may be obtained from node values included in one of the plurality of columns.

According to an embodiment, a first reference value may include a first reference node value (e.g., 100) that is compared with each of the plurality of node values 1310, and a first reference line value (e.g., 300) that is compared with each of the plurality of line values 1320. For example, a size (e.g., 100) of the first reference node value compared to each of the plurality of node values 1310 may be different from a size (e.g., 300) of the first reference line value compared to each of the plurality of line values 1320.

According to an embodiment, a second reference value may include a second reference node value (e.g., 200) that is compared to each of the plurality of node values 1310, and a second reference line value (e.g., 500) that is compared to each of the plurality of line values 1320. For example, a size (e.g., 200) of the second reference node value compared to each of the plurality of node values 1310 may be different from a size (e.g., 500) of the second reference line value compared to each of the plurality of line values 1320.

According to an embodiment, the control circuitry 312 may identify that a first value indicating a first contact on the second region 212 is higher than or equal to a first reference value and lower than or equal to a second reference value. For example, the control circuitry 312 may identify whether each of the plurality of first node values 1311 indicating the first contact on the second region 212 is lower than or equal to a second reference node value (e.g., 200). The control circuitry 312 may identify whether a second value indicating a second contact on the first region 211 is higher than the first reference value, and an area of the second contact on the first region 211 is larger than a first defined area. The control circuitry 312 may identify whether the second value indicating the second contact on the first region 211 is higher than the first reference value and an area of the second contact on the first region 211 is larger than the first defined area, through a plurality of second node values 1312 indicating the second contact. For example, the first defined area may indicate 10% or more of an area of the first region 211. For example, the control circuitry 312 may identify a region 1312a including node values being higher than a first reference node value (e.g., 100) among the plurality of second node values 1312 corresponding to the first region 211. The control circuitry 312 may identify whether an area of the second contact identified through the region 1312a is larger than the first defined area.

According to an embodiment, the control circuitry 312 may identify whether an area of the first contact is larger than or equal to a second defined area, based on whether an area of the second contact identified through the region 1312a is larger than the first defined area. For example, the control circuitry 312 may identify, among the plurality of first node values 1311 corresponding to the second region 212, a region 1311a that is higher than or equal to a third reference value (e.g., the third reference value 630 of FIG. 6) (e.g., 30) and lower than or equal to a second reference node value (e.g., 200). The control circuitry 312 may identify whether an area of the region 1311a is larger than the second defined area. For example, the second defined area may indicate 5% or more of an area of the second region 212. For example, the second defined area may indicate 5% or more of an area of a portion 212a of the second region 212. For example, the second defined area may indicate 5% or more of an area of another portion 212b of the second region 212. The control circuitry 312 may identify whether recognizong the second contact as a touch input, by comparing the second value with a third threshold value higher than the second reference value, Based on an area of the second contact identified through region 1312a being larger than the first defined area and an area of the first contact identified through region 1311a being larger than or equal to the second defined area. For example, the control circuitry 312 may identify whether recognizing the second contact as a touch input, by comparing a second value indicating the second contact on the first region 211 included in the plurality of second node values 1312 with a third threshold value higher than a second reference node value (e.g., 200). For example, the control circuitry 312 may change a state of the control circuitry 312 to a third state of identifying whether recognizing the second contact as a touch input by comparing the second value and the third threshold value, based on an area of the second contact identified through the region 1312a being larger than the first defined area and an area of the first contact identified through the region 1311a being larger than or equal to the second defined area. In the third state, when another contact distinct from the first contact and the second contact is transferred (caused) on the touch sensor 311, the control circuitry 312 may identify whether recognizing the other contact as a touch input through the third threshold value higher than the second reference value.

According to an embodiment, the control circuitry 312 may identify whether a portion 1322a among the plurality of second line values 1322 indicating the first contact of the second region 212 is higher than the first reference value, based on an area of the second contact identified through the region 1312a being larger than the first defined area. The control circuitry 312 may identify whether at least one of a portion 1322a among the plurality of second line values 1322 corresponding to the second region 212 is higher than a first reference line value (e.g., 300), based on an area of the second contact identified through the region 1312a being larger than the first defined area. The control circuitry 312 may change a state of the control circuitry 312 to a third state, based on a line value (e.g., 805) of one of the portion 1322a among the plurality of second line values 1322 being higher than a first reference line value (e.g., 300). For example, while the electronic device 101 is accommodated in a pocket (or bag), an unintended contact through a user's body within the pocket may be transferred (or caused) on the first region 211. According to an embodiment, the electronic device 101 may provide a method for identifying that the electronic device 101 is accommodated in a pocket (or bag) through a second contact on the first region 211. The electronic device 101 according to an embodiment may provide a method for reducing malfunction of the electronic device 101 by identifying whether a second contact is a touch input, based on a third threshold value higher than a second reference value, based on identifying that the electronic device 101 is accommodated in a pocket (or bag).

According to an embodiment, the control circuitry 312 may obtain a third value indicating a third contact on at least one of the first region 211 and the second region 212 in the third state. The control circuitry 312 may identify whether the third value is higher than a second reference value. For example, the control circuitry 312 may be configured to release the third state based on the third value being higher than a second reference node value (e.g., 200). For example, the control circuitry 312 may change a state of the control circuitry 312 from the third state to a fourth state, based on the third value being higher than a second reference node value (e.g., 200). The control circuitry 312 may identify whether recognizing another contact on the touch sensor 311 as a touch input through the second reference value, in the fourth state. The fourth state may be referred to as a basic state because it is a state that identifies a contact on the touch sensor 311 as a touch input through the second reference value that is commonly utilized. For example, when a user moves the electronic device 101 from a pocket (or bag), at least one of the first region 211 and the second region 212 may be contacted with the user's body. According to an embodiment, based on the third value obtained under the third state being higher than the second reference value, the electronic device 101 may identify that the electronic device 101 is moved to the outside of a pocket (or bag), and provide a method for releasing the third state.

As described above, the electronic device 101 according to an embodiment may provide a method for reducing malfunction of the electronic device 101, by identifying a state in which the electronic device 101 is accommodated within a pocket (or bag), through contacts on the first region 211 and/or the second region 212.

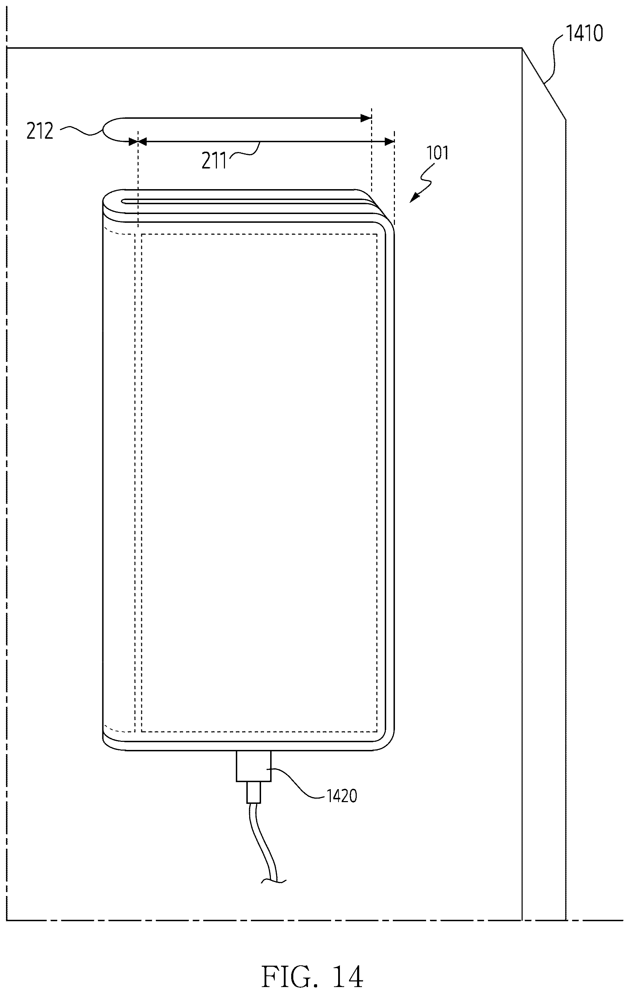

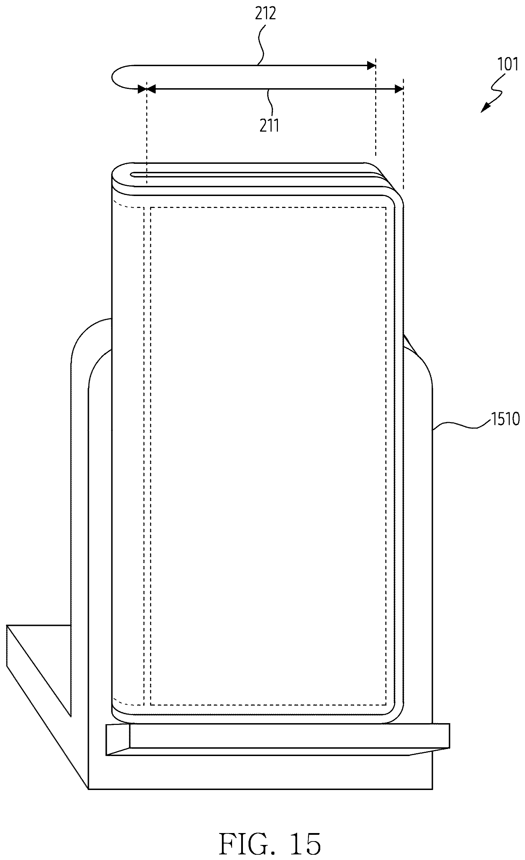

Referring back to FIG. 3, according to an embodiment, a state of the control circuitry 312 may be identified (or changed) based on data other than a contact on the display 210. For example, the processor 120 may change a state of the control circuitry 312, based on data obtained from the battery 330 and/or the sensor 320. For example, an example of the processor 120 changing the control circuitry 312 based on data other than a contact on the display 210 may be described through FIGS. 14 and 15.

FIG. 14 illustrates a charging state of an exemplary electronic device according to an embodiment.

Referring to FIG. 14, according to an embodiment, the second region 212 may be positioned on an object 1410. In a state that the second region 212 is positioned on the object 1410, a battery (e.g., the battery 330 of FIG. 3) may be charged. The control circuitry 312 may obtain a first value indicating a first contact by the object 1410 transferred through the second region 212. The control circuitry 312 may identify whether the first value is lower than a first reference value (e.g., the first reference value 610 of FIG. 6). The processor 120 may receive data indicating that the first value is lower than the first reference value from the control circuitry 312.

According to an embodiment, the processor 120 may change a touch sensitivity of a first portion within the first region 211, based on identifying that a first value is lower than a first reference value and the battery 330 is in a charging state. For example, the processor 120 may change a state of the control circuitry 312 to a fifth state, based on identifying that the first value is lower than the first reference value and the battery 330 is in a charging state. The control circuitry 312 may identify whether recognizing a second contact on the first region 211 as a touch input in accordance with a third touch sensitivity being lower than a first touch sensitivity utilizing a first threshold value (e.g., the first threshold value 640 of FIG. 6) in the fifth state. When another contact distinct from the first contact and the second contact is transferred (caused) on the touch sensor 311 in the fifth state, the control circuitry 312 may identify whether recognizing the other contact as a touch input based on a fourth threshold value. For example, the fourth threshold value utilized when the control circuitry 312 recognizes the second contact on the first region 211 as a touch input in accordance with the third touch sensitivity may be higher than a second reference value (e.g., the second reference value 620 of FIG. 6).

For example, for charging the battery 330, a charging terminal 1420 may be connected to the electronic device 101. When the charging terminal 1420 is connected to the electronic device 101, a touch sensitivity of the first region 211 (or the touch sensor 210) may be excessively increased by a ground provided by the charging terminal 1420. The electronic device 101 according to an embodiment may compensate for the touch sensitivity that is relatively increased by the charging terminal 1420, by changing the touch sensitivity while the battery 330 is being charged.

FIG. 15 illustrates a state of an exemplary electronic device according to an embodiment in accordance with an angle.

Referring to FIG. 15, according to an embodiment, the second region 212 may be positioned on an object 1510. The control circuitry 312 may obtain a first value indicating a first contact by the object 1510 transferred through the second region 212. The control circuitry 312 may identify whether the first value is lower than a first reference value (e.g., the first reference value 610 of FIG. 6). The control circuitry 312 may identify whether the first value is lower than a first reference value (e.g., the first reference value 610 of FIG. 6). The processor 120 may receive data indicating that the first value is lower than the first reference value from the control circuitry 312.

According to an embodiment, the processor 120 may identify an angle of the electronic device 101 through a sensor (e.g., the sensor 320 of FIG. 3). For example, the processor 120 may identify whether an angle of the electronic device 101 is within a defined angle range through the sensor 320. For example, the defined angle range may be 0 degrees to about 90 degrees, but is not limited thereto. The processor 120 may change a state of the control circuitry 312 to a first state, based on identifying that the first value is lower than the first reference value and an angle identified through the sensor 320 is within the defined angle range. The control circuitry 312 may identify whether recognizing the second contact on the first region 211 as a touch input in accordance with a first touch sensitivity, in the first state.

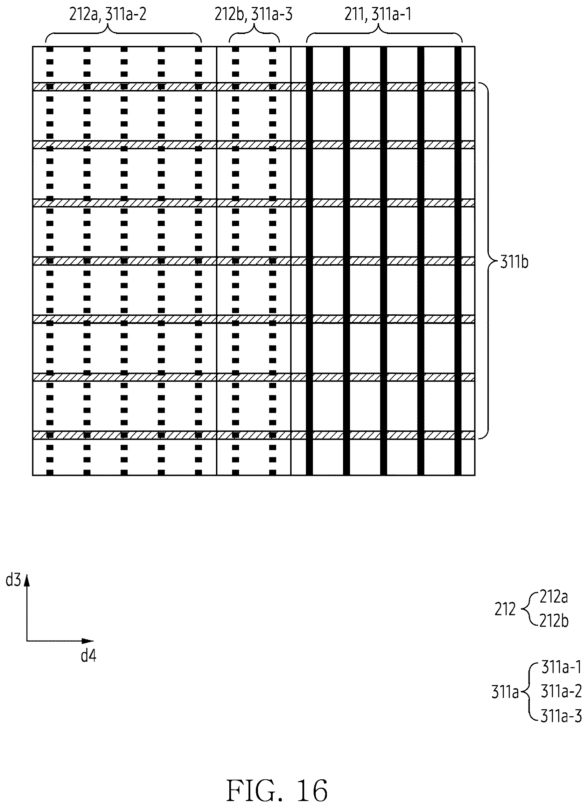

Referring back to FIG. 3, the control circuitry 312 may scan a plurality of channels within the touch sensor 311 to identify the first contact and/or the second contact. For example, the scanning operation of the control circuitry 312 may be described through FIG. 16 below.

FIG. 16 illustrates a scanning operation of exemplary control circuitry according to an embodiment.

Referring to FIG. 16, the touch sensor 311 may include a plurality of first channels 311a and a plurality of second channels 311b. One of the plurality of first channels 311a and the plurality of second channels 311b may define (or form) a receiption channel of the touch sensor 311. Another one of the plurality of first channels 311a and the plurality of second channels 311b may define (or form) a transmission channel of the touch sensor 311. According to an embodiment, each of the plurality of first channels 311a may be intersected with each of the plurality of second channels 311b. The plurality of first channels 311a may be disposed on a different layer from the plurality of second channels 311b. For example, the touch sensor 311 may include a non-conductive layer including a non-conductive material interposed between the plurality of first channels 311a and the plurality of second channels 311b.

According to an embodiment, the plurality of first channels 311a may extend along a third direction d3. Each of the plurality of first channels 311a may be spaced apart from each other. For example, the plurality of first channels 311a may include a first channel region 311a-1, a second channel region 311a-2, and/or a third channel region 311a-3. The first channel region 311a-1 may be disposed in the first region 211. The second channel region 311a-2 may be disposed in a portion 212a of the second region 212. The third channel region 311a-3 may be disposed in another portion 212b of the second region 212. The first channel region 311a-1 may include a portion of the plurality of first channels 311a extending along the third direction d3 in the first region 211. The second channel region 311a-2 may include another portion of the plurality of first channels 311a extending along the third direction d3 in the portion 212a of the second region 212. The third channel region 311a-3 may include still another portion of the plurality of first channels 311a extending along the third direction d3 in the other portion 212b of the second region 212.

According to an embodiment, the plurality of second channels 311b may extend along a fourth direction d4. The fourth direction d4 may be different from the third direction d3. For example, the fourth direction d4 may be substantially perpendicular to the third direction d3, but is not limited thereto. Each of the plurality of second channels 311b may be spaced apart from each other. For example, the plurality of second channels 311b may extend from the portion 212a of the second region 212, across the other portion 212b of the second region 212, to the first region 211.

According to an embodiment, the control circuitry 312 may scan a first portion in the first region 211, by providing first power to the first channel region 311a-1 and the plurality of second channels 311b to sense a contact on the first portion of the first region 211. The control circuitry 312 may bypass providing the first power to the second channel region 311a-2 and the third channel region 311a-3, while scanning the first portion of the first region 211 based on the first power. The control circuitry 312 may refrain from providing the first power to the second channel region 311a-2 and the third channel region 311a-3, while scanning the first portion of the first region 211 based on the first power. The control circuitry 312 may refrain from providing the first power to the second channel region 311a-2 and the third channel region 311a-3, while scanning the first portion of the first region 211 based on the first power. For example, in order to sense a second contact on the first portion of the first region 211, the control circuitry 312 may provide first power to the first channel region 311a-1 and the plurality of second channels 311b. When a user's intended touch is transferred only through the first portion within the first region 211, scanning a second portion within the second region 212 by providing the first power to the second channel region 311a-2 and the third channel region 311a-3 may waste power. Hereinafter, an operation capable of reducing power for scanning the second portion within the second region 212, while the control circuitry 312 scans the first portion of the first region 211 through the first channel region 311a-1 and the plurality of second channels 311b based on the first power, will be described.

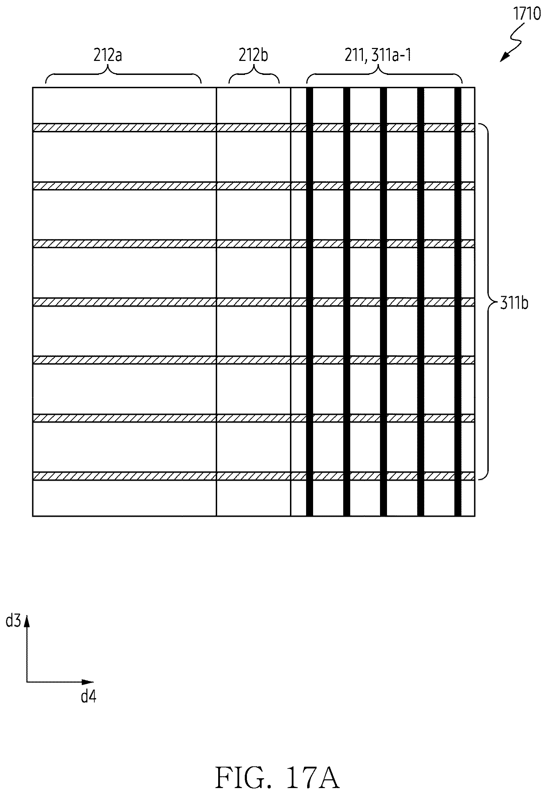

FIGS. 17A to 17I illustrate a low-power scanning operation of exemplary control circuitry according to an embodiment.

FIGS. 17A to 17I illustrate an example in which the control circuitry 312 scans at least one of a first portion within the first region 211 and a second portion within the second region 212 by providing second power lower than first power to at least one of the first channel region 311a-1, the second channel region 311a-2, the third channel region 311a-3, and the plurality of second channels 311b, while scanning the first portion within the first region 211 in accordance with the method described in FIG. 16 based on the first power. A fact that the control circuitry 312 provides first power may indicate that the first power is consumed in the touch sensor 311 for a defined time, and a fact that the control circuitry 312 provides second power may indicate that the second power lower than the first power is consumed in the touch sensor 311 for the defined time. For example, a scan period by the control circuitry 312 in a case that the second power is consumed in the touch sensor 311 may be longer than a scan period by the control circuitry 312 in a case that the first power is consumed in the touch sensor 311. For example, the amount of current supplied in the touch sensor 311 for a defined time in a case that the second power is consumed in the touch sensor 311 may be less than the amount of current supplied in the touch sensor 311 for the defined time in a case that the first power is consumed in the touch sensor 311. Hereinafter, the second power may only indicate that it is lower than the first power, and may not indicate any one certain value. For example, in each of FIGS. 17A to 17H, power supplied to the plurality of first channels 311a and the plurality of second channels 311b by the control circuitry 312 may be different from each other.

Referring to FIG. 17A, in a first example 1710, the control circuitry 312 may scan a first portion within the first region 211, and a second portion within the second region 212, based on providing second power to the first channel region 311a-1, and the plurality of second channels 311b. In other words, in the first example 1720, the control circuitry 312 may provide second power to the first channel region 311a-1, and the plurality of second channels 311b, and refrain from (or bypass) providing power to the second channel region 311a-2, and the third channel region 311b-2.

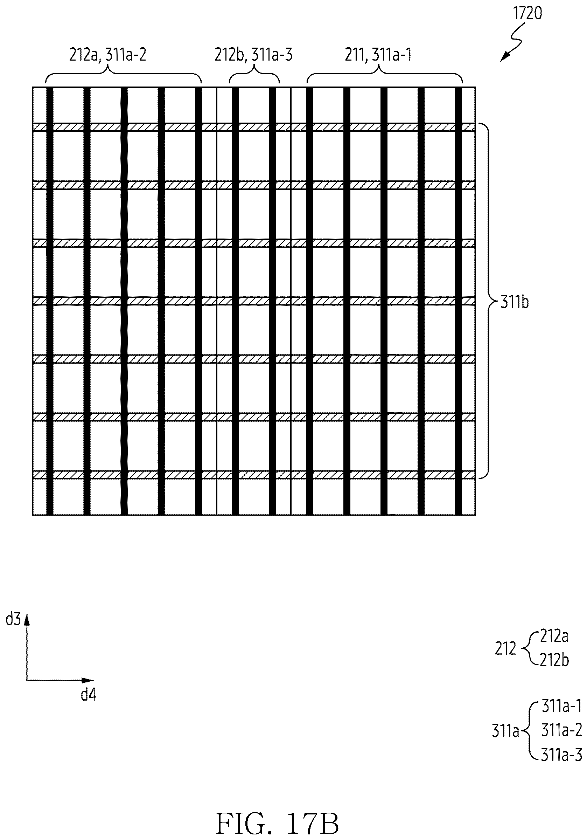

Referring to FIG. 17B, in a second example 1720, the control circuitry 312 may scan a first portion within the first region 211, and a second portion within the second region 212, based on providing second power to the first channel region 311a-1, the second channel region 311a-2, the third channel region 311a-3, and the plurality of second channels 311b. In other words, in the second example 1720, the control circuitry 312 may scan the touch sensor 311, based on providing second power to the plurality of first channels 311a and the plurality of second channels 311b of the touch sensor 311.

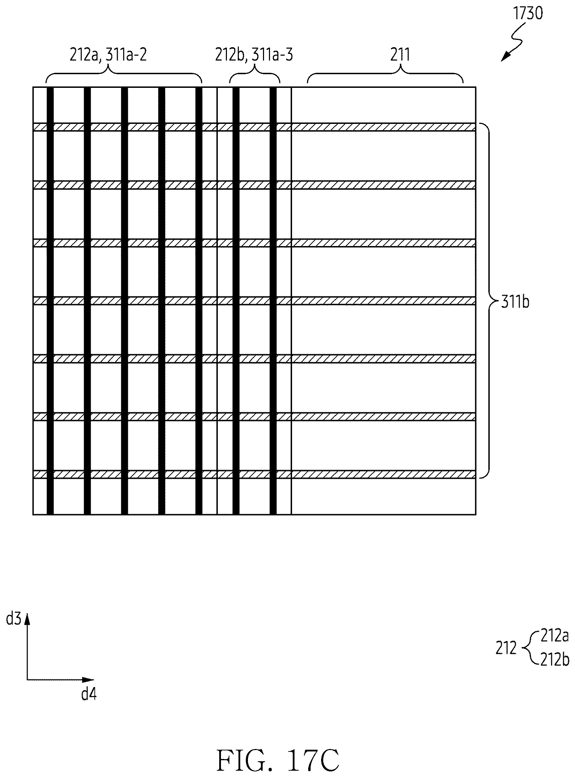

Referring to FIG. 17C, in a third example 1730, the control circuitry 312 may scan a first portion within the first region 211, and a second portion within the second region 212, based on providing second power to the second channel region 311a-2, the third channel region 311a-3, and the plurality of second channels 311b. For example, in the third example 1730, the control circuitry 312 may bypass (or refrain from) providing power to the first channel region 311a-1.

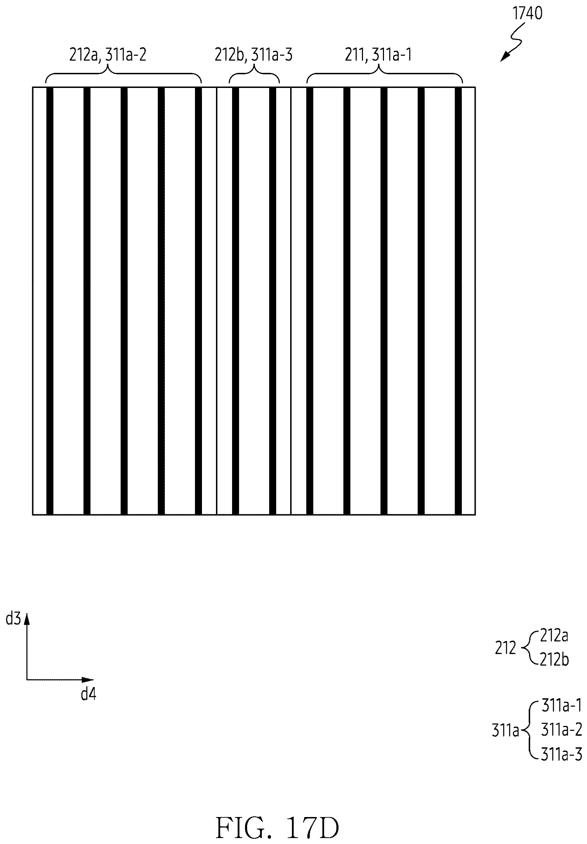

Referring to FIG. 17D, in a fourth example 1740, the control circuitry 312 may scan a first portion within the first region 211, and a second portion within the second region 212, based on providing second power to the plurality of first channels 311a. In other words, in the fourth example 1740, the control circuitry 312 may scan the first portion within the first region 211, and the second portion within the second region 212, based on providing second power to the first channel region 311a-1, the second channel region 311a-2, and the third channel region 311a-3. For example, in the fourth example 1740, the control circuitry 312 may bypass (or refrain from) providing power to the plurality of second channels 311b.

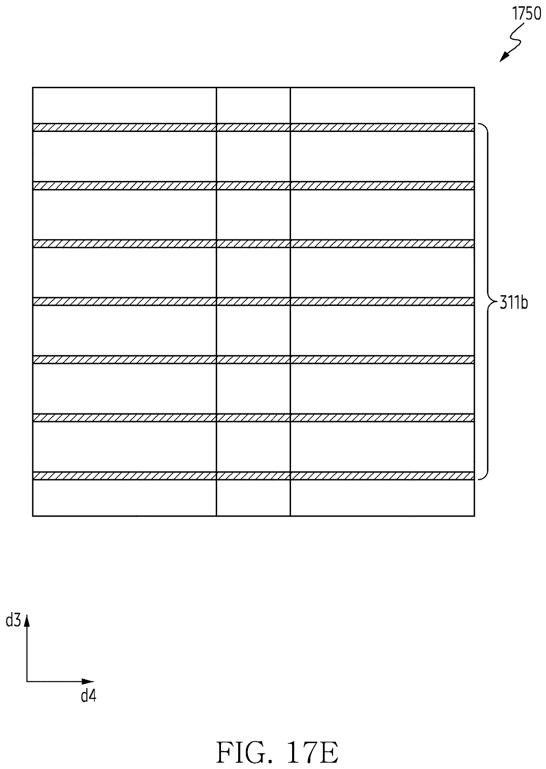

Referring to FIG. 17E, in a fifth example 1750, the control circuitry 312 may scan a first portion within the first region 211, and a second portion within the second region 212, based on providing second power to the plurality of second channels 311b. For example, in the fifth example 1750, the control circuitry 312 may bypass (or refrain from) providing power to the plurality of first channels 311a. For example, in the fifth example 1750, the control circuitry 312 may bypass (or refrain from) providing power to the first channel region 311a-1, the second channel region 311a-2, and the third channel region 311a-3.

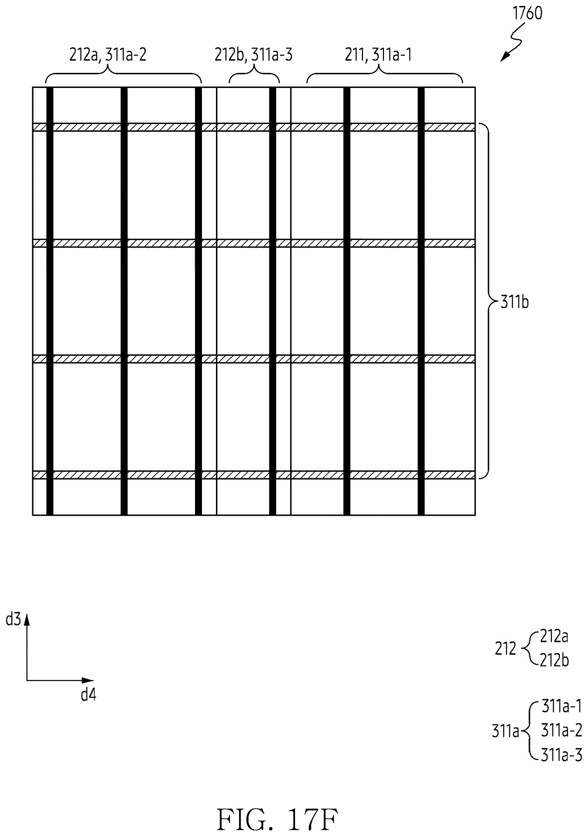

Referring to FIG. 17F, in a sixth example 1760, the control circuitry 312 may scan a first portion within the first region 211 and a second portion within the second region 212, based on providing second power to a portion of the first channel region 311a-1, a portion of the second channel region 311a-2, a portion of the third channel region 311a-3, and a portion of the plurality of second channels 311b. For example, the number of the plurality of first channels 311a and the plurality of second channels 311b to which power is suplied within the sixth example 1760 may be less than the number of the plurality of first channels 311a and the plurality of second channels 311b to which power is suplied within the second example 1720.

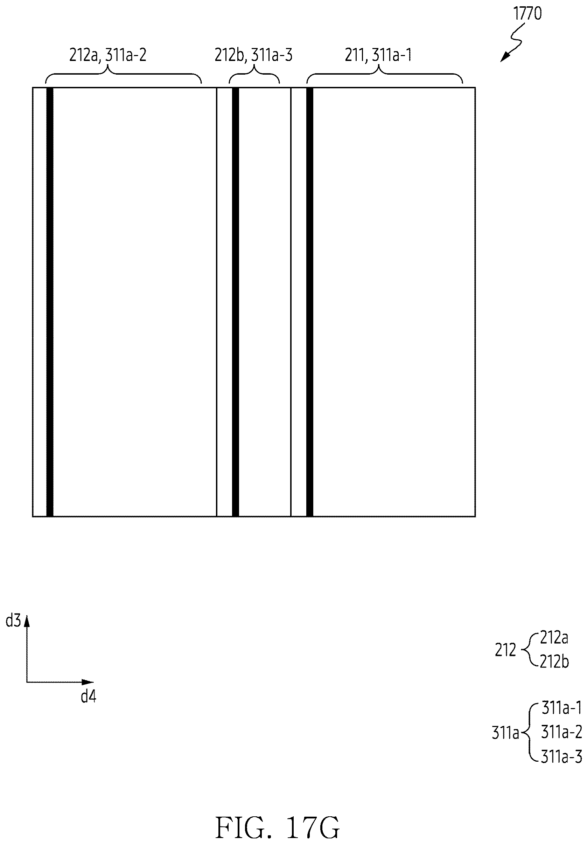

Referring to FIG. 17G, in a seventh example 1770, the control circuitry 312 may scan a first portion within the first region 211 and a second portion within the second region 212, based on providing second power to a portion of the first channel region 311a-1, a portion of the second channel region 311a-2, and a portion of the third channel region 311a-3. For example, in the seventh example 1770, the control circuitry 312 may scan the first portion within the first region 211 and the second portion within the second region 212, based on providing second power to one channel within the first channel region 311a-1, one channel within the second channel region 311a-2, and one channel within the third channel region 311a-3. For example, in the seventh example 1770, the control circuitry 312 may bypass (or refrain from) providing second power to the plurality of second channels 311b.

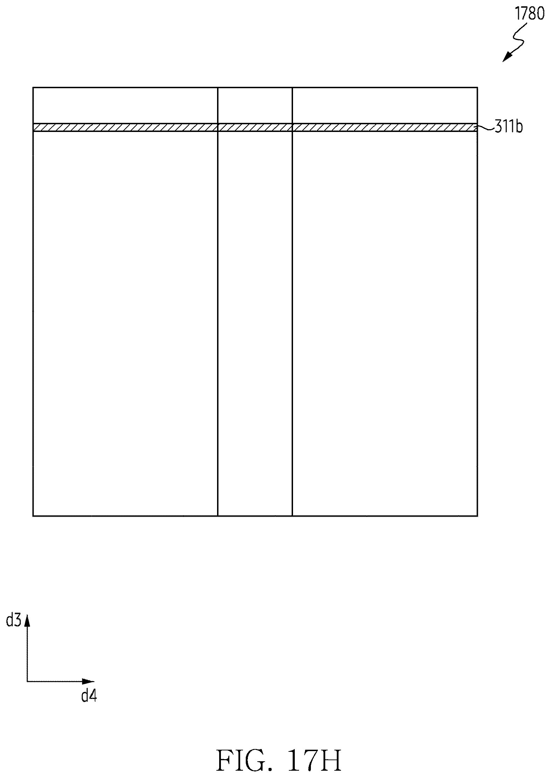

Referring to FIG. 17H, in an eighth example 1780, the control circuitry 312 may scan a first portion within the first region 211 and a second portion within the second region 212, based on providing second power to a portion of the plurality of second channels 311b. For example, the control circuitry 312 may scan the first portion within the first region 211 and the second portion within the second region 212, based on providing second power to one of the plurality of second channels 311b. For example, in the eighth example 1780, the control circuitry 312 may bypass (or refrain from) providing second power to the plurality of first channels 311a.

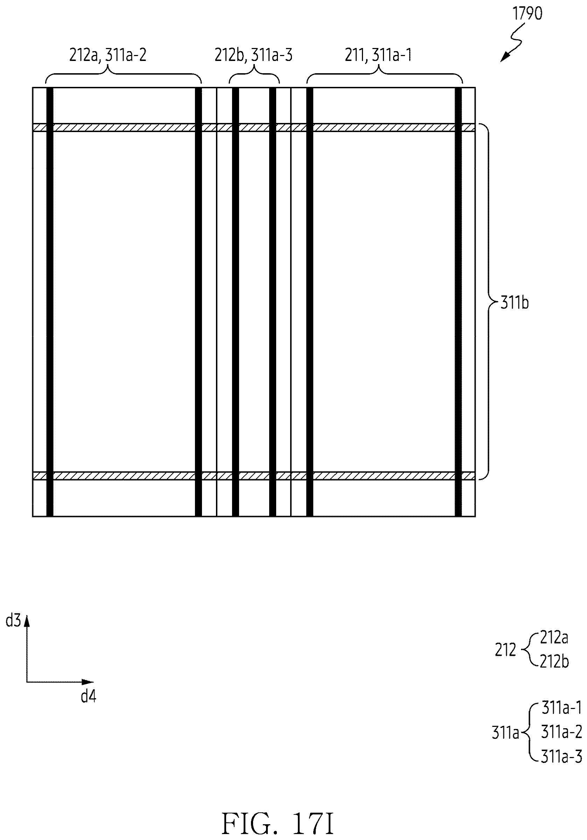

Referring to FIG. 17I, in a ninth example 1790, the control circuitry 312 may scan a first portion within the first region 211 and a second portion within the second region 212, based on providing second power to a portion of the plurality of first channels 311a and a portion of the plurality of second channels 311b. The control circuitry 312 may scan the first portion within the first region 211 and the second portion within the second region 212, based on providing second power to a portion of the first channel region 311a-1, a portion of the second channel region 311a-2, a portion of the third channel region 311a-3, and a portion of the plurality of second channels 311b. For example, the number of the plurality of first channels 311a and the plurality of second channels 311b to which power is supplied in the ninth example 1790 may be less than the number of the plurality of first channels 311a and the plurality of second channels 311b to which power is supplied in the sixth example 1760. For example, in the ninth example 1790, the control circuitry 312 may provide second power to channels disposed at a periphery among the plurality of second channels 311b, a portion of the first channel region 311a-1 disposed at a periphery of the first region 211, a portion of the second channel region 311a-2 disposed at a periphery of a portion 212a of the second region 212, and a portion of the third channel region 311a-3 disposed at a periphery of another portion 212b of the second region 212.

As described above, the electronic device 101 according to an embodiment may provide a method for reducing power consumption by scanning the touch sensor 311 based on second power lower than first power, while the control circuitry 312 scans a first portion within the first region 211 through the first channel region 311a-1 and the plurality of second channels 311b based on the first power.

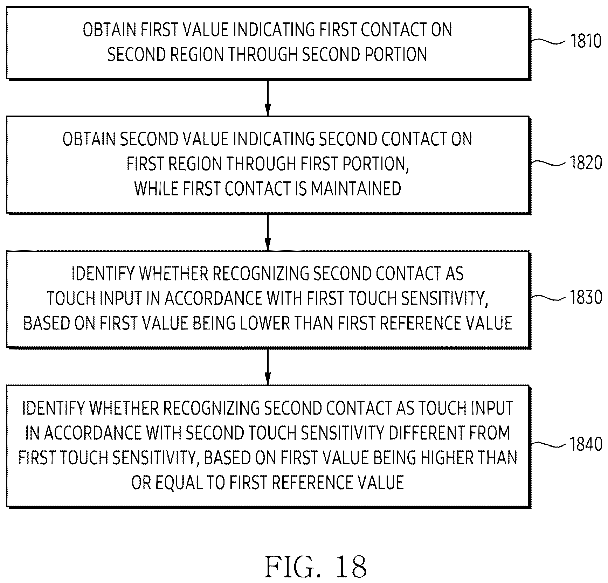

FIG. 18 illustrates an example of an operation of control circuitry according to an embodiment.

Referring to FIG. 18, in operation 1810, control circuitry (e.g., the control circuitry 312 of FIG. 3) may obtain a first value indicating a first contact through a second portion of a touch sensor (e.g., the touch sensor 311 of FIG. 3) within a second region (e.g., the second region 212 of FIG. 4 and FIG. 5). The first contact may be transferred (or caused) from an object outside an electronic device (e.g., the electronic device 101 of FIG. 3) and/or an object inside the electronic device 101. The object may be at least one of a non-conductor and a conductor. As the electronic device 101 is carried by a user, the second region 212 may be exposed to various environments. The first contact through the second region 212 may provide data for identifying a state of the control circuitry 312. For example, the first contact may be transferred (or caused) through a second portion within the second region 212 while the second region 212 is deactivated, but is not limited thereto. For example, the first contact may be transferred (or caused) through the second portion while the second region 212 is activated.

In operation 1820, the control circuitry 312 may obtain a second value indicating a second contact on the first region 211 through a first portion of the touch sensor 311 within a first region (e.g., the first region 211 of FIGS. 4 and 5), while the first contact on the second region 212 is maintained. For example, the second contact may be transferred (or caused) through the first portion within the first region 211 while the first region 211 is activated, but is not limited thereto. For example, the second contact may be transferred (or caused) through the first portion within the first region 211 while the first region 211 is deactivated.

In operation 1830, the control circuitry 312 may identify whether recognizing the second contact as a touch input in accordance with a first touch sensitivity, based on a first value indicating the first contact being lower than a first reference value (e.g., the first reference value 610 of FIG. 6). For example, the first reference value may provide a criterion for identifying that a non-conductor is contacted on the first region 211 and/or the second region 212. The control circuitry 312 may change a state of the control circuitry 312 to a first state in which the second contact is recognized as a touch input in accordance with the first touch sensitivity, based on the first value indicating the first contact being lower than the first reference value. For example, in a first state of the control circuitry 312, the control circuitry 312 may identify whether recognizing the second contact as a touch input through a first threshold value (e.g., the first threshold value 640 of FIG. 6) being lower than a second reference value (e.g., the second reference value 620 of FIG. 6). The second reference value may be a value that the control circuitry 312 generally utilizes to identify a contact on the touch sensor 311 as a touch input. Since the first threshold value is lower than the second reference value, a touch sensitivity while the control circuitry 312 uses the second reference value to identify whether the second contact is a touch input may be lower than a touch sensitivity while the control circuitry 312 uses the first threshold value to identify whether the second contact is a touch input.

In operation 1840, the control circuitry 312 may identify whether recognizing the second contact on the first region 211 as a touch input in accordance with a second touch sensitivity different from the first touch sensitivity, based on the first value being higher than or equal to the first reference value. The second touch sensitivity may be lower than the first touch sensitivity. For example, while identifying whether the second contact is a touch input in accordance with the second touch sensitivity, the control circuitry 312 may utilize a threshold value (e.g., the second threshold value 910 of FIG. 9 and/or the third threshold value of FIG. 12 and FIG. 13) higher than the first threshold value.

As described above, the electronic device 101 according to an embodiment may optimize a touch sensitivity of the control circuitry 312 of the electronic device 101 exposed to various environments by differently changing a sensitivity of the control circuitry 312, by comparing a first value corresponding to the first contact on the second region 212 with the first reference value.

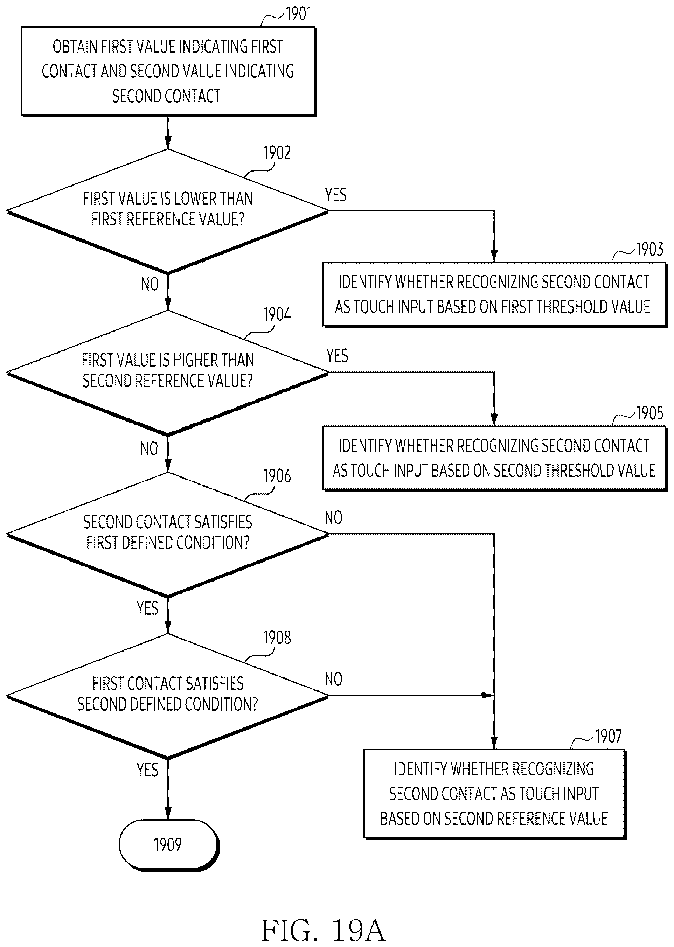

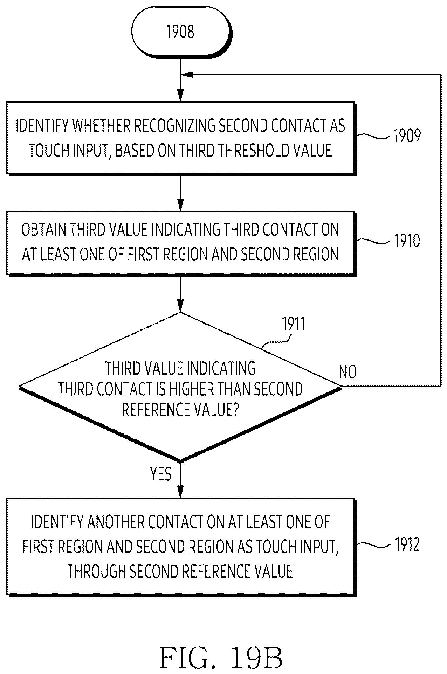

FIG. 19A illustrates an example of an operation in which exemplary control circuitry according to an embodiment changes a state of the control circuitry, and FIG. 19B illustrates an example of an operation in which control circuitry according to an embodiment changes a state of the control circuitry.

Referring to FIG. 19A, in operation 1901, control circuitry (e.g., the control circuitry 312 of FIG. 3) may obtain a first value indicating a first contact through a second portion of a touch sensor (e.g., the touch sensor 311 of FIG. 3) in a second region (e.g., the second region 212 of FIG. 4 and FIG. 5). The control circuitry 312 may obtain a second value indicating a second contact on a first region (e.g., the first region 211 of FIG. 4 and FIG. 5) while the first contact on the second region 212 is maintained. Operation 1901 may correspond to operations 1810 and 1820 of FIG. 18.

In operation 1902, the control circuitry 312 may identify whether a first value indicating the first contact on the second region 212 is lower than a first reference value (e.g., the first reference value 610 of FIG. 6). For example, the first reference value may provide a criterion for identifying that a non-conductor is contacted on the first region 211 and/or the second region 212. The control circuitry 312 may perform operation 1903, based on the first value indicating the first contact on the second region 212 being lower than the first reference value. The control circuitry 312 may perform operation 1904, based on the first value indicating the first contact on the second region 212 being higher than or equal to the first reference value.

In operation 1903, the control circuitry 312 may identify whether recognizing the second contact as a touch input based on a first threshold value (e.g., the first threshold value 640 of FIG. 6), based on the first reference value being lower than the first reference value. For example, the control circuitry 312 may identify that a non-conductor is contacted on the second region 212, based on a first value indicating the first contact on the second region 212 being lower than the first reference value. When the first contact on the second region 212 is caused by a non-conductor, a size of a second value corresponding to the second contact on the first region 211 may be relatively reduced compared to a case where the first contact on the second region 212 is not caused by the non-conductor. In order to compensate for a relative decrease in a touch sensitivity of the touch sensor 311 due to a relative decrease in a size of the second value by a non-conductor on the second region 212, the control circuitry 312 may identify whether the second contact is a touch input, by utilizing a first threshold value (e.g., the first threshold value 640 of FIG. 6) that is lower than a second reference value (e.g., the second reference value 620 of FIG. 6). For example, the control circuitry 312 may change a state of the control circuitry 312 to a first state of identifying whether the second contact is a touch input through the first threshold value, based on the first value being lower than the first reference value. The first state of the control circuitry 312 may be referred to as a low ground state.

In operation 1904, the control circuitry 312 may identify whether a first value indicating a first contact on the second region 212 is higher than a second reference value (e.g., the second reference value 620 of FIG. 6), based on the first value indicating the first contact on the second region 212 being higher than or equal to the first reference value. The second reference value may correspond to a value for identifying that a conductor is contacted on the first region 211 and/or the second region 212. The second reference value may correspond to a value that the control circuitry 312 generally utilizes to identify a contact on the touch sensor 311 as a touch input. The control circuitry 312 may perform operation 1905, based on the first value indicating the first contact on the second region 212 being higher than the second reference value. The control circuitry 312 may perform operation 1906, based on the first value indicating the first contact on the second region 212 being higher than or equal to the first reference value and lower than or equal to the second reference value.

In operation 1905, the control circuitry 312 may identify whether recognizing the second contact as a touch input, based on a second threshold value (e.g., the second threshold value 910 of FIG. 9) based on the first value being higher than the second reference value. The second threshold value may be higher than the second reference value. The control circuitry 312 may identify that a conductor is contacted on the second region 212, based on the first value being higher than the second reference value. For example, in a case where the first contact on the second region 212 is caused by a conductor, a size of a second value corresponding to the second contact on the first region 211 may be relatively increased compared to a case where the first contact on the second region 212 is not caused by the conductor. In order to compensate for a relative increase in a touch sensitivity of the touch sensor 311 due to a relative increase in a size of the second value by a conductor on the second region 212, the control circuitry 312 may identify whether the second contact is a touch input, by utilizing the second threshold value higher than the second reference value. The control circuitry 312 may change a state of the control circuitry 312 to a second state of identifying whether the second contact is a touch input through the second threshold value, based on the first value being higher than the second reference value. The second state of the control circuitry 312 may be referred to as a good ground state. The second threshold value may be higher than the second reference value.

In operation 1906, the control circuitry 312 may identify whether the second contact on the first region 211 satisfies a first defined condition, based on the first value indicating the first contact on the second region 212 being higher than or equal to the first reference value and lower than or equal to the second reference value. For example, the control circuitry 312 may identify whether the second value indicating the second contact on the first region 211 is higher than the first reference value and an area of the second contact on the first region 211 is larger than a first defined area. For example, the control circuitry 312 may identify whether the second contact on the first region 211 satisfies a first defined condition. based on the first value on the second region 212 being higher than or equal to the first reference value and lower than or equal to the second reference value. For example, the control circuitry 312 may identify whether the second value indicating the second contact on the first region 211 is higher than the first reference value and an area of the second contact on the first region 211 is larger than a first defined area. The first defined area may indicate 10% or more of an area of the first region 211, but is not limited thereto. For example, the control circuitry 312 may identify a region (e.g., the region 1312a of FIG. 13) including node values higher than or equal to a first reference node value among a plurality of second node values (e.g., the plurality of second node values 1312 of FIG. 13) corresponding to the first region 211. The first reference node value may be included within the first reference value. The control circuitry 312 may identify whether an area of the second contact is larger than the first defined area through the region 1312a. The control circuitry 312 may perform operation 1907 based on the second contact not satisfying the first defined condition. The control circuitry 312 may perform operation 1908 based on the second contact satisfying the first defined condition.

In operation 1907, the control circuitry 312 may identify whether recognizing the second contact on the first region 211 as a touch input based on the second reference value, based on the second contact not satisfying the first defined condition. For example, the control circuitry 312 may change a state of the control circuitry 312 to a fourth state of identifying whether recognizing the second contact as a touch input by using the second reference value, based on the second contact not satisfying the first defined condition. For example, the fourth state may be referenced as a default state.

In operation 1908, the control circuitry 312 may identify whether the first contact on the second region 212 satisfies a second defined condition, based on the second contact satisfying the first defined condition. The second defined condition may include that the first contact is larger than or equal to a second defined area. The second defined area may indicate 5% or more of an area of the second region 212, but is not limited thereto. The control circuitry 312 may identify whether an area of the first contact on the second region 212 is larger than or equal to the second defined area, based on the second contact satisfying the first defined condition. For example, the control circuitry 312 may identify whether an area of the first contact is larger than or equal to the second defined area, through a region (e.g., the region 1311a of FIG. 13). The control circuitry 312 may identify that the first contact satisfies the second defined condition, based on the first contact on the second region 212 being larger than or equal to the second defined area. The second defined condition may include that at least one of a portion 1322a (e.g., the portion 1322a of FIG. 13) of a plurality of second line values 1322 (e.g., the plurality of second line values 1322 of FIG. 13) corresponding to the second region 212 is higher than a first reference line value (e.g., 300). The control circuitry 312 may identify whether at least one of a portion 1322a of the plurality of second line values 1322 corresponding to the second region 212 is higher than a first reference line value (e.g., 300), based on the second contact satisfying the first defined condition. The control circuitry 312 may identify that the first contact satisfies the second defined condition, based on at least one of the portions 1322a of the plurality of second line values 1322 being higher than a first reference line value (e.g., 300). The control circuitry 312 may perform operation 1909 based on the first contact satisfying the second defined condition. The control circuitry 312 may perform operation 1907 based on the first contact not satisfying the second defined condition.

In operation 1909, the control circuitry 312 may identify whether recognizing the second contact as a touch input, based on a third threshold value higher than a second reference value, based on the first contact satisfying the second defined condition. The control circuitry 312 may change a state of the control circuitry 312 to a third state of identifying whether recognizing the second contact as a touch input through the third threshold value, based on the first contact satisfying the second defined condition. The control circuitry 312 may identify that the electronic device 101 is in a state of being accommodated in a user's pocket (or bag), based on the first contact satisfying the second defined condition. The third state of the control circuitry 312 may be referred to as a pocket state. For example, the third threshold value may be different from the second threshold value, but is not limited thereto. For example, the third threshold value may be substantially the same as the second threshold value.

According to an embodiment, the control circuitry 312 may identify whether recognizing the second contact as a touch input through the second reference value, based on the first contact not satisfying the second defined condition. The control circuitry 312 may change a state of the control circuitry 312 to a fourth state of identifying whether recognizing the second contact as a touch input through the second reference value, based on the first contact not satisfying the second defined condition.

Referring to FIG. 19B, in operation 1910, the control circuitry 312 may obtain a third value indicating a third contact on at least one of the first region 211 and the second region 212, in the third state. For example, the third contact may be caused by a user's body while the electronic device 101 is moved to the outside of a user's pocket (or bag).

In operation 1911, the control circuitry 312 may identify whether a third value indicating a third contact on at least one of the first region 211 and the second region 212 is higher than a second reference value. The control circuitry 312 may perform operation 1912 based on the third value being higher than the second reference value. The control circuitry 312 may perform operation 1909 based on the third value being lower than or equal to the second reference value.

In operation 1912, the control circuitry 312 may change a state of the control circuitry 312 from the third state to the fourth state, based on the third value being higher than the second reference value. For example, the control circuitry 312 may identify whether recognizing another contact on the first region 211, and/or the second region 212 as a touch input through the second reference value, in the fourth state.

According to an embodiment, the control circuitry 312 may maintain a state of the control circuitry 312 in the third state, based on the third value being lower than or equal to the second threshold value. For example, under the third state, the control circuitry 312 may identify whether recognizing another contact on the first region 211 and/or the second region 212 as a touch input through the third threshold value.

As described above, the electronic device 101 according to an embodiment may provide a method for optimizing a touch sensitivity on the touch sensor 311 by changing a state of the control circuitry 312 based on the first value indicating the first contact on the second region 211.

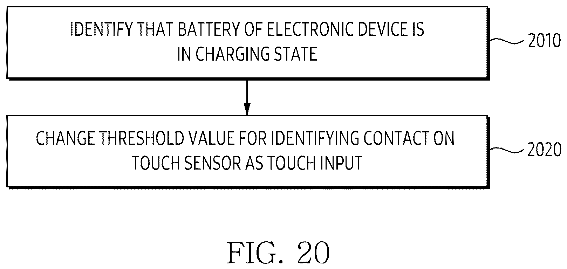

FIG. 20 illustrates an example of an operation of an exemplary processor according to an embodiment.

Referring to FIG. 20, in operation 2010, a processor (e.g., the processor 120 of FIG. 3) may identify that a battery (e.g., the battery 330 of FIG. 3) of an electronic device (e.g., the electronic device 101 of FIG. 3) is in a charging state. For example, in the charging state, power of the battery 330 may receive power from a charging terminal (e.g., the charging terminal 1420 of FIG. 14) connected to the electronic device 101. For example, in the charging state, power of the battery 330 may receive power from a wireless charging device.

In operation 2020, the processor 120 may change a threshold value for identifying a contact on a touch sensor (e.g., the touch sensor 311 of FIG. 3) as a touch input. For example, the processor 120 may change a threshold value for identifying a contact on the touch sensor 311 as a touch input from a second reference value to a fourth threshold value higher than the second reference value, based on identifying that the battery 330 is in a charging state. For example, the processor 120 may change a state of control circuitry (e.g., the control circuitry 312 of FIG. 3) to a fifth state for identifying a contact on the touch sensor 311 as a touch input through the fourth threshold value, based on identifying that the battery 330 is in a charging state.

As described above, the electronic device 101 according to an embodiment may provide a method for optimizing a touch sensitivity of the touch sensor 311 while the battery 330 is in a charging state.

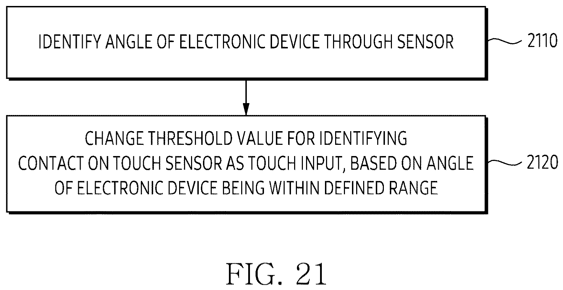

FIG. 21 illustrates an example of an operation of an exemplary processor according to an embodiment.

Referring to FIG. 21, in operation 2110, a processor (e.g., the processor 120 of FIG. 3) may identify an angle of an electronic device (e.g., the electronic device 101 of FIG. 3) through a sensor (e.g., the sensor 320 of FIG. 3). For example, the processor 120 may identify whether an angle of the electronic device 101 identified through the sensor 320 is within a defined range. For example, the defined angle may be 0 degrees to about 90 degrees, but is not limited thereto. The processor 120 may identify that the electronic device 101 is not gripped by a user and is positioned at a specific location, based on the angle of the electronic device 101 being within the defined angle. The processor 120 may identify that the electronic device 101 is gripped by a user, based on the angle of the electronic device 101 being greater than the defined angle.

In operation 2120, the processor 120 may change a threshold value for identifying a contact on the touch sensor 311 as a touch input, based on the angle of the electronic device 101 being within the defined range. For example, the processor 120 may change the threshold value for identifying a contact on the touch sensor 311 as a touch input from a second reference value to a first threshold value (e.g., the first threshold value 640 of FIG. 6) lower than the second reference value, based on the angle of the electronic device 101 being within the defined range. For example, the processor 120 may change a state of control circuitry (e.g., the control circuitry 312 of FIG. 3) to a first state, based on the angle of the electronic device 101 being within the defined range. However, it is not limited thereto. The processor 120 may obtain a first value indicating a first contact on a second region (e.g., the second region 212 of FIG. 4 and FIG. 5) through the control circuitry 312. The processor 120 may identify whether the first value being lower than a first reference value. The processor 120 may change a state of the control circuitry 312 to the first state, based on the first value being lower than the first reference value and the angle of the electronic device 101 being within the defined range.

As described above, the electronic device 101 according to an embodiment may provide a method for optimizing a touch sensitivity of the touch sensor 311 based on identifying the angle of the electronic device 101.

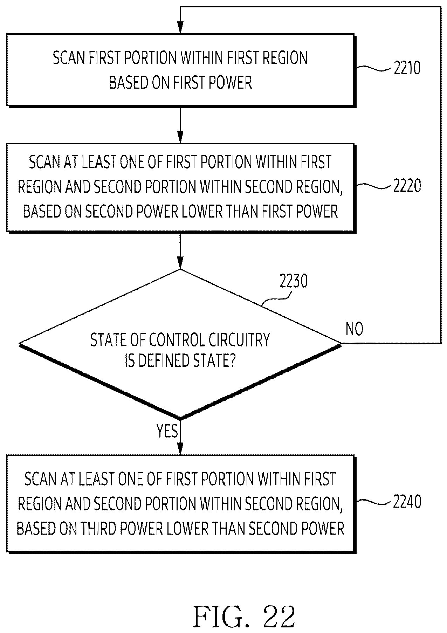

FIG. 22 illustrates an example of an operation in which exemplary control circuitry according to an embodiment scans a touch sensor.

Referring to FIG. 22, in operation 2210, control circuitry (e.g., the control circuitry 312 of FIG. 3) may scan a first portion within a first region (e.g., the first region 211 of FIGS. 4 and 5) based on first power. The control circuitry 312 may scan the first portion within the first region 211, by providing first power to a first channel region (e.g., the first channel region 311a-1 of FIG. 16) and a plurality of second channels (e.g., the plurality of second channels 311b of FIG. 16). For example, the control circuitry 312 may scan the first portion within the first region 211, based on providing a first current to the first channel region 311a-1 and the plurality of second channels 311b for a defined time according to a first cycle. For example, the control circuitry 312 may bypass (or refrain from) scanning a second channel region (e.g., the second channel region 311a-2 of FIG. 16) and a third channel region (e.g., the third channel region 311a-3 of FIG. 16) based on the first power, while scanning the first portion of the first region 211 based on the first power.

In operation 2220, the control circuitry 312 may scan at least one of the first portion within the first region 211 and the second portion within the second region 212, based on second power lower than the first power. For example, the control circuitry 312 may scan at least one of the first portion within the first region 211 and the second portion within the second region 212, by providing second power lower than the first power to at least one of the first channel region 311a-1, the second channel region 311a-2, the third channel region 311a-3, and the plurality of second channels 311b, while scanning the first portion within the first region 211 based on the first power. A fact that the control circuitry 312 provides the second power may indicate that the second power lower than the first power is consumed at the touch sensor 311 for a defined time. For example, a second cycle, which is a scan cycle by the control circuitry 312 in a case where the second power is consumed in the touch sensor 311, may be longer than a first cycle, which is a scan cycle by the control circuitry 312 in a case where the first power is consumed in the touch sensor 311. For example, the amount of current supplied within the touch sensor 311 for a defined time in a case where the second power is consumed in the touch sensor 311 may be smaller than the amount of current supplied within the touch sensor 311 for a defined time in a case where the first power is consumed in the touch sensor 311. According to an embodiment, the control circuitry 312 may perform a scanning operation corresponding to at least one of a first example (e.g., the first example 1710 of FIG. 17A), a second example (e.g., the second example 1720 of FIG. 17B), a third example (e.g., the third example 1730 of FIG. 17C), a fourth example (e.g., the fourth example 1740 of FIG. 17D), a fifth example (e.g., the fifth example 1750 of FIG. 17E), a sixth example (e.g., the sixth example 1760 of FIG. 17F), a seventh example (e.g., the seventh example 1770 of FIG. 17G), an eighth example (e.g., the eighth example 1780 of FIG. 17H), and/or a ninth example (e.g., the ninth example 1790 of FIG. 17I).

According to an embodiment, the control circuitry 312 may remove noise generated within the first region 211 by performing operation 2220. For example, referring back to FIG. 11, noise may be caused in the regions 1101 within a plurality of second node values 1112 corresponding to the first region 211, by the first contact on the second region 212. The control circuitry 312 may identify noise in the regions 1101 within the plurality of second node values 1112 by performing a scanning operation corresponding to operation 2210 and operation 2220. The control circuitry 312 may remove (or compensate for) the identified noise.

In operation 2230, the control circuitry 312 may identify whether the state of the control circuitry 312 is a defined state. For example, the control circuitry 312 may identify whether the state of the control circuitry 312 is at least one of the first state, the third state, and/or the fifth state. The control circuitry 312 may perform operation 2240 based on the state of the control circuitry 312 being a defined state. The control circuitry 312 may perform operation 2210 based on the state of the control circuitry 312 not being a defined state.

In operation 2240, the control circuitry 312 may scan at least one of the first portion within the first region 211 and the second portion within the second region 212, based on third power lower than the second power, based on identifying that the control circuitry is in a defined state (operation 2230-YES). For example, the control circuitry 312 may scan at least one of the first portion within the first region 211 and the second portion within the second region 212, by providing third power lower than the second power to at least one of the first channel region 311a-1, the second channel region 311a-2, the third channel region 311a-3, and the plurality of second channels 311b. A fact that the control circuitry 312 provides the third power may indicate that the third power lower than the second power is consumed in the touch sensor 311 for a defined time. For example, a third cycle, which is a scan cycle by the control circuitry 312 in a case where the third power is consumed in the touch sensor 311, may be longer than a second cycle, which is a scan cycle by the control circuitry 312 in a case where the second power is consumed in the touch sensor 311. For example, the amount of current supplied within the touch sensor 311 for a defined time in a case where the third power is consumed in the touch sensor 311 may be less than the amount of current supplied within the touch sensor 311 for a defined time in a case where the second power is consumed in the touch sensor 311. According to an embodiment, in operation 2240, the control circuitry 312 may perform a scanning operation corresponding to at least one of the first example 1710, the second example 1720, the third example 1730, the fourth example 1740, the fifth example 1750, the sixth example 1760, the seventh example 1770, the eighth example 1780, and/or the ninth example 1790.

For example, in operation 2240, the control circuitry 312 may perform a scanning operation in accordance with the first example 1710, based on identifying that the state of the control circuitry 312 is the first state.

For example, in operation 2240, the control circuitry 312 may perform a scanning operation in accordance with the eighth example 1770, based on identifying that the state of the control circuitry 312 is the third state.

For example, in operation 2240, the control circuitry 312 may perform a scanning operation in accordance with the first example 1710, based on identifying that the state of the control circuitry 312 is the fifth state.

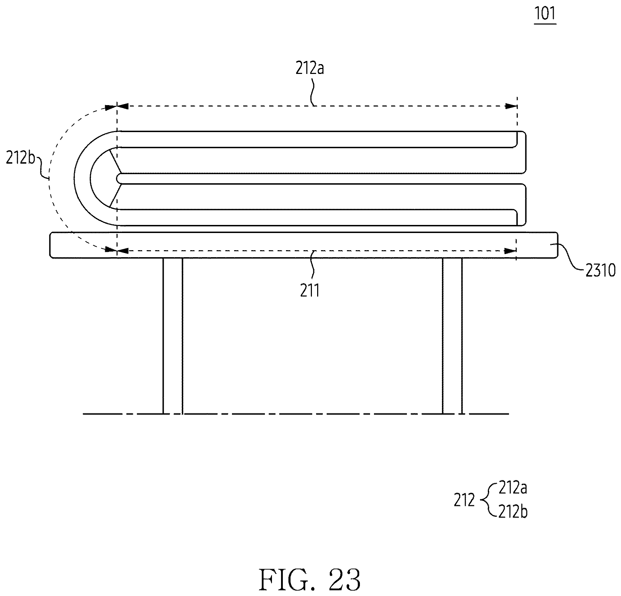

For example, in operation 2240, the control circuitry 312 may perform a scanning operation in accordance with the ninth example 1790, based on identifying that the state of the control circuitry 312 is the sixth state. For example, the sixth state may be described with reference to FIG. 23.

FIG. 23 illustrates a state of an electronic device while exemplary control circuitry according to an embodiment performs a low power scanning.

Referring to FIG. 23, according to an embodiment, the first region 211 may be positioned on an object 2310. The first region 211 may be contacted to the object 2310. For example, the first region 211 may be deactivated while being in contact with the object 2310. The second region 212 may be deactivated. For example, a portion 212a of the second region 212 may be deactivated while the first region 211 is contacted to the object 2310. For example, another portion 212b of the second region 212 may be deactivated while the first region 211 is contacted to the object 2310. The control circuitry 312 may change a state of the control circuitry 312 to the sixth state, while the display 210 is deactivated. The control circuitry 312 may perform a scanning operation according to a ninth example (e.g., the ninth example 1790 of FIG. 17I) within the sixth state of the control circuitry 312.

As described above, the electronic device 101 according to an embodiment may provide a method for reducing power consumption by scanning the touch sensor 311 based on the second power lower than the first power, while the control circuitry 312 scans the first portion within the first region 211 through the first channel region 311a-1 and the plurality of second channels 311b based on the first power.

As a contact on a display is applied, the electronic device may obtain a value corresponding to the contact. The electronic device may identify whether recognizing the contact on the display as a touch input, based on the value. As the electronic device is exposed to various environments, the display may also be exposed to various environments. Since a size of the value obtained by a contact on the display is different in accordance with an environment to which the display is exposed, a touch sensitivity may be different in accordance with the environment to which the display is exposed. The electronic device may require a method for controlling a touch sensitivity in accordance with the environment to which the electronic device is exposed.

The technical problems to be achieved in this document are not limited to those described above, and other technical problems not mentioned herein will be clearly understood by those having ordinary knowledge in the art to which the present disclosure belongs, from the following description.

The effects that can be obtained from the present disclosure are not limited to those described above, and any other effects not mentioned herein will be clearly understood by those having ordinary knowledge in the art to which the present disclosure belongs, from the following description.

An electronic device (e.g., the electronic device 101 of FIG. 3) is provided. According to an embodiment, the electronic device may include a display (e.g., the display 210 of FIG. 4 and FIG. 5) including a first region (e.g., the first region 211 of FIG. 4 and FIG. 5) and a second region (e.g., the second region 212 of FIG. 4 and FIG. 5) connected to the first region and bent with respect to the first region. According to an embodiment, the electronic device may include a touch sensor (e.g., the touch sensor 311 of FIG. 3) including a first portion disposed in the first region and a second portion disposed in the second region. According to an embodiment, the electronic device may include control circuitry (e.g., the control circuitry 312 of FIG. 3). According to an embodiment, the control circuitry may be configured to obtain, via the second portion of the touch sensor, a first value indicating a first contact on the second region. According to an embodiment, the control circuitry may be configured to, while the first contact is maintained, obtain, via the first portion of the touch sensor, a second value indicating a second contact on the first region. According to an embodiment, the control circuitry may be configured to, based on the first value being lower than a first reference value (e.g., the first reference value 610 of FIG. 6), identify whether recognizing the second contact as a touch input in accordance with a first touch sensitivity. According to an embodiment, the control circuitry may be configured to, based on the first value being higher than or equal to the first reference value, identify whether recognizing the second contact as the touch input in accordance with a second touch sensitivity different from the first touch sensitivity.

According to an embodiment, the electronic device may provide a method for optimizing a touch sensitivity of the touch sensor, based on identifying an environment to which the electronic device is exposed, through the first value.

According to an embodiment, the first value may be obtained via the second portion of the touch sensor, while the second region is deactivated.

According to an embodiment, the electronic device may provide a method for optimizing a touch sensitivity of the touch sensor, based on identifying an environment to which the electronic device is exposed, through the first value obtained while the second region is deactivated.

According to an embodiment, the first touch sensitivity may be higher than the second touch sensitivity.

According to an embodiment, the electronic device may provide a method for differently changing a touch sensitivity of the touch sensor, based on identifying an environment to which the electronic device is exposed through the first value.

According to an embodiment, the first contact may be transferred from an object (e.g., the object 710 of FIG. 7A, the body 1010 of FIG. 10A, the body 1020 of FIG. 10B, and/or the body 1030 of FIG. 10C) positioned outside of the electronic device.

According to an embodiment, the electronic device may provide a method for optimizing a touch sensitivity of the touch sensor, based on identifying an environment to which the electronic device is exposed, through a first value corresponding to a first contact of an object outside the electronic device.

According to an embodiment, the first contact may be transferred from an object (e.g., the object 720 of FIG. 7A) positioned within the electronic device.

According to an embodiment, the electronic device may provide a method for optimizing a touch sensitivity of the touch sensor, based on identifying an environment to which the electronic device is exposed, through a first value corresponding to a first contact of an object inside the electronic device.

According to an embodiment, the control circuitry may be configured to, based on the first value being lower than the first reference value, identify whether recognizing the second contact as the touch input through a comparison between the second value and a first threshold value (e.g., the first threshold value 640 of FIG. 6). According to an embodiment, the control circuitry may be configured to, based on the first value being higher than a second reference value (e.g., the second reference value 620 of FIG. 6) higher than the first reference value, identify whether recognizing the second contact as the touch input through a comparison between the second value and a second threshold value (e.g., the second threshold value 910 of FIG. 9) higher than the first threshold value.

According to an embodiment, the electronic device may provide a method for optimizing a touch sensitivity of the touch sensor, based on identifying an environment to which the electronic device is exposed through a comparison of a first value with a plurality of reference values.

According to an embodiment, the first threshold value may be lower than the second reference value. According to an embodiment, the second threshold value may be higher than the second reference value.

According to an embodiment, the control circuitry may be configured to, based on the first value being lower than or equal to the second reference value, identify whether the second value is higher than the first reference value and an area of the second contact on the first region is larger than a first defined area. According to an embodiment, the control circuitry may be configured to, based on the area of the second contact being larger than the first defined area and an area of the first contact being larger than or equal to a second defined area, identify whether recognizing the second contact as the touch input through a comparison between a third threshold value higher than the second reference value and the second value. According to an embodiment, the control circuitry may be configured to, based on the area of the second contact being smaller than the first defined area, identify whether recognizing the second contact as the touch input through a comparison between the second reference value and the second value.

According to an embodiment, the electronic device may provide a method for optimizing a touch sensitivity of the touch sensor, by identifying an environment to which the electronic device is exposed, based on an area of a second contact being larger than or equal to a defined area.

According to an embodiment, the control circuitry may be configured to obtain a third value indicating a third contact on at least one of the first region or the second region, in a state identifying whether recognizing the second contact as the touch input through the comparison between the second value and the third threshold value. According to an embodiment, the control circuitry may be configured to, based on the third value being higher than the second reference value, release the state.

According to an embodiment, the first value may include a plurality of node values (e.g., the plurality of first node values 1311 of FIG. 13), corresponding to the first contact, respectively obtained from each of a plurality of nodes included in the touch sensor, and a plurality of line values (e.g., the plurality of second line values 1322 of FIG. 13) respectively corresponding to columns formed by the plurality of nodes. According to an embodiment, the control circuitry may be configured to, based on identifying the first value being lower than or equal to the second reference value, identify whether an area of the second contact on the first region is larger than a first defined area. According to an embodiment, the control circuitry may be configured to, based on the area of the second contact being larger than the first defined area and at least one (e.g., the portion 1322a of the plurality of second line values 1322 of FIG. 13) of the plurality of line values being higher than a reference line value, identify whether recognizing the second contact as the touch input through a comparison between the second value and a third threshold value higher than the first threshold value. According to an embodiment, the control circuitry may be configured to, based on the area of the second contact being smaller than the first defined area, identify whether recognizing the second contact as the touch input through a comparison between the second value and the second reference value.

According to an embodiment, the touch sensor may include a plurality of first channels (e.g., the plurality of first channels 311a of FIG. 16), extending in a first direction, spaced apart from each other, the plurality of first channels including a first channel region (e.g., the first channel region 311a-1 of FIG. 16) disposed in the first region, a second channel region (e.g., the second channel region 311a-2 of FIG. 16) disposed in a portion of the second region, and a third channel region (e.g., the third channel region 311a-3 of FIG. 16) disposed in another portion of the second region. According to an embodiment, the touch sensor may include a plurality of second channels (e.g., the plurality of second channels 311b of FIG. 16), extending in a second direction rectangular to the first direction, spaced apart from each other. According to an embodiment, the control circuitry may be configured to scan the first portion of the touch sensor by providing first power to the first channel region and the plurality of second channels to sense a contact on the first portion of the touch sensor. According to an embodiment, the control circuitry may be configured to, while scanning the first portion of the touch sensor based on the first power, scan at least one of the first portion of the touch sensor and the second portion of the touch sensor by providing second power lower than the first power to at least one of the first channel region, the second channel region, the third channel region, and the plurality of second channels.

According to an embodiment, the electronic device may provide a method for reducing power consumption by scanning the touch sensor based on the second power lower than the first power, while the control circuitry scans the first portion within the first region based on the first power.

According to an embodiment, the control circuitry may be configured to, while scanning the first portion of the touch sensor based on the first power, bypass providing the first power to the second channel region and the third channel region.

According to an embodiment, the electronic device may provide a method for reducing power consumption by bypassing providing the first power to the second channel region and the third channel region, while the control circuitry scans the first portion within the first region based on the first power.

According to an embodiment, the control circuitry may be configured to, while scanning the first portion of the touch sensor based on the first power, identify a state of the control circuitry. According to an embodiment, the control circuitry may be configured to, based on identifying that the state of the control circuitry is a defined state, scan at least one of the first portion of the touch sensor and the second portion of the touch sensor by providing third power lower than the second power to at least one of the first channel region, the second channel region, the third channel region, and the plurality of second channels.

According to an embodiment, the electronic device may include a sensor (e.g., the sensor 320 of FIG. 3). According to an embodiment, the electronic device may include a processor (e.g., the processor 120 of FIG. 3) operably coupled to the sensor. According to an embodiment, the control circuitry may be configured to, based on the first value being lower than the first reference value and an angle of the electronic device identified using the sensor being within a defined angle range, identify whether recognizing the second contact as the touch input in accordance with the first touch sensitivity.

According to an embodiment, the electronic device may provide a method for optimizing a touch sensitivity of the touch sensor based on identifying an angle of the electronic device.

According to an embodiment, the electronic device may include a battery (e.g., the battery 330 of FIG. 3). According to an embodiment, the electronic device may include a processor (e.g., the processor 120 of FIG. 3) operably coupled to the battery. According to an embodiment, the control circuitry may be configured to, while the battery is being charged, based on the first value being lower than the first reference value, identify whether recognizing the second contact as the touch input in accordance with a third touch sensitivity lower than the first touch sensitivity.

According to an embodiment, the electronic device may provide a method for optimizing a touch sensitivity of the touch sensor, based on identifying a charging state of the battery of the electronic device.

An electronic device (e.g., the electronic device 101 of FIG. 3) is provided. According to an embodiment, the electronic device may include a first housing (e.g., the first housing 410 of FIG. 4). According to an embodiment, the electronic device may include a second housing (e.g., the second housing 420 of FIG. 4) movable with respect to the first housing. According to an embodiment, the electronic device may comprise a hinge structure (e.g., the hinge structure 430 of FIG. 4) capable of changing to a folded state in which a first direction toward which a surface (e.g., the first surface 411 of FIG. 4) of the first housing faces is opposite to a second direction toward which a surface (e.g., the third surface 421 of FIG. 4) of the second housing faces, or an unfolded state in which the first direction is the same as the second direction. According to an embodiment, the electronic device may comprise a display (e.g., the display 210 of FIG. 3), disposed on the surface of the first housing and the surface of the second housing across the hinge structure, exposed to the outside of the electronic device within the folded state. According to an embodiment, the electronic device may comprise a touch sensor (e.g., the touch sensor 311 of FIG. 3), disposed within the display, including a first portion disposed on the first housing and a second portion connected to the first portion and disposed on the hinge structure and the second housing. According to an embodiment, the electronic device may comprise control circuitry (e.g., the control circuitry 312 of FIG. 3). According to an embodiment, the control circuitry may be configured to obtain a first value indicating a first contact through the second portion. According to an embodiment, the control circuitry may be configured to, while the first contact is maintained, obtain a second value indicating a second contact through the first portion. According to an embodiment, the control circuitry may be configured to, based on the first value being lower than a first reference value, identify whether recognizing the second contact as a touch input in accordance with a first touch sensitivity. According to an embodiment, the control circuitry may be configured to, based on the first value being higher than or equal to the first reference value, identify whether recognizing the second contact as the touch input in accordance with a second touch sensitivity different from the first touch sensitivity.

According to an embodiment, the electronic device may provide a method for optimizing a touch sensitivity of the touch sensor based on identifying an environment to which the electronic device is exposed through the first value.

According to one embodiment, the first value may be obtained through the second portion while a region (e.g., the second region 212 of FIG. 4) of the display corresponding to the second portion is deactivated.

According to an embodiment, the electronic device may provide a method for optimizing a touch sensitivity of the touch sensor, based on identifying an environment to which the electronic device is exposed, through the first value obtained while the second region is deactivated.

According to an embodiment, the first touch sensitivity may be higher than the second touch sensitivity.

According to an embodiment, the control circuitry may be configured to identify whether recognizing the second contact as the touch input through a comparision between the second value with a first threshold value (e.g., the first threshold value 640 of FIG. 6), based on the first value being lower than the first reference value. According to an embodiment, the control circuitry may be configured to identify whether recognizing the second contact as the touch input through a comparison between the second value and a second threshold value (e.g., the second threshold value 910 of FIG. 9) higher than the first threshold value, based on the first value being higher than a second reference value (e.g., the second reference value 620 of FIG. 6) higher than the first reference value.

According to an embodiment, the electronic device may provide a method for optimizing a touch sensitivity of the touch sensor, based on identifying an environment to which the electronic device is exposed through a comparison of the first value with a plurality of reference values.

According to an embodiment, the electronic device may include a battery (e.g., the battery 330 of FIG. 3). According to an embodiment, the electronic device may include a processor (e.g., the processor 120 of FIG. 3) operably coupled to the battery. According to an embodiment, the processor may be configured to identify whether recognizing the second contact as the touch input in accordance with a third touch sensitivity lower than the first touch sensitivity, based on the first value being lower than the first reference value while the battery is being charged.

According to an embodiment, the electronic device may provide a method for optimizing a touch sensitivity of the touch sensor, based on identifying a charging state of the battery of the electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (210) including a first region (211), and a second region (212), connected to the first region (211), bent with respect to the first region (211);
a touch sensor (311) including a first portion disposed in the first region (211) and a second portion disposed in the second region (212); and
control circuitry (312) configured to:
obtain, via the second portion of the touch sensor (311), a first value indicating a first contact on the second region (212);
while the first contact is maintained, obtain, via the first portion of the touch sensor (311), a second value indicating a second contact on the first region (211);
based on the first value being lower than a first reference value (610), identify whether recognizing the second contact as a touch input in accordance with a first touch sensitivity; and
based on the first value being higher than or equal to the first reference value (610), identify whether recognizing the second contact as the touch input in accordance with a second touch sensitivity different from the first touch sensitivity.

2. The electronic device (101) of claim 1, wherein the first value is obtained via the second portion of the touch sensor (311), while the second region (212) is deactivated.

3. The electronic device (101) of any one of claim 1 or 2, wherein the first touch sensitivity is higher than the second touch sensitivity.

4. The electronic device (101) of any one of claims 1 to 3, wherein the first contact is transferred from an object positioned outside of the electronic device (101).

5. The electronic device (101) of any one of claims 1 to 4, wherein the first contact is transferred from an object positioned within the electronic device (101).

6. The electronic device (101) of any one of claims 1 to 5, wherein the control circuitry (312) is configured to:
based on the first value being lower than the first reference value (610), identify whether recognizing the second contact as the touch input through a comparison between the second value and a first threshold value (640); and
based on the first value being higher than a second reference value (620) higher than the first reference value (610), identify whether recognizing the second contact as the touch input through a comparison between the second value and a second threshold value (910) higher than the first threshold value (640).

7. The electronic device (101) of claim 6, wherein the first threshold value (640) is lower than the second reference value (620), and
wherein the second threshold value (910) is higher than the second reference value (620).

8. The electronic device (101) of claim 6, wherein the control circuitry (312) is configured to:
based on the first value being lower than or equal to the second reference value (620), identify whether the second value is higher than the first reference value (610) and an area of the second contact on the first region (211) is larger than a first defined area;
based on the area of the second contact being larger than the first defined area and an area of the first contact being larger than or equal to a second defined area, identify whether recognizing the second contact as the touch input through a comparison between a third threshold value higher than the second reference value (620) and the second value; and
based on the area of the second contact being smaller than the first defined area, identify whether recognizing the second contact as the touch input through a comparison between the second reference value (620) and the second value.

9. The electronic device (101) of claim 8, wherein the control circuitry (312) is configured to:
obtain a third value indicating a third contact on at least one of the first region (211) or the second region (212), in a state identifying whether recognizing the second contact as the touch input through the comparison between the second value and the third threshold value; and
based on the third value being higher than the second reference value (620), release the state.

10. The electronic device (101) of claim 6, wherein the first value includes:
a plurality of node values (1310), corresponding to the first contact, respectively obtained from each of a plurality of nodes included in the touch sensor (311), and
a plurality of line values respectively corresponding to columns formed by the plurality of nodes, and
wherein the control circuitry is configured to:
based on identifying the first value being lower than or equal to the second reference value (620), identify whether an area of the second contact on the first region (211) is larger than a first defined area;
based on the area of the second contact being larger than the first defined area and at least one (1322a) of the plurality of line values being higher than a reference line value, identify whether recognizing the second contact as the touch input through a comparison between the second value and a third threshold value higher than the first threshold value (640); and
based on the area of the second contact being smaller than the first defined area, identify whether recognizing the second contact as the touch input through a comparison between the second value and the second reference value (620).

11. The electronic device (101) of any one of claims 1 to 10, wherein the touch sensor (311) includes:
a plurality of first channels (311a), extending in a first direction, spaced apart from each other, the plurality of first channels (311a) including:
a first channel region (311a-1) disposed in the first region (211),
a second channel region (311a-2) disposed in a portion of the second region (212),
a third channel region (311a-3) disposed in another portion of the second region (212); and
a plurality of second channels (311b), extending in a second direction rectangular to the first direction, spaced apart from each other,
wherein the control circuitry (312) is configured to:
scan the first portion of the touch sensor (311) by providing first power to the first channel region (311a-1) and the plurality of second channels (311b) to sense a contact on the first portion of the touch sensor (311); and
while scanning the first portion of the touch sensor (311) based on the first power, scan at least one of the first portion of the touch sensor (311) and the second portion of the touch sensor (311) by providing second power lower than the first power to at least one of the first channel region (311a-1), the second channel region (311a-2), the third channel region (311a-3), and the plurality of second channels (311b).

12. The electronic device (101) of claim 11, wherein the control circuitry (312) is configured to:
while scanning the first portion of the touch sensor (311) based on the first power, bypass providing the first power to the second channel region (311 a-2) and the third channel region (311a-3).

13. The electronic device (101) of claim 11, wherein the control circuitry (312) is configured to:
while scanning the first portion of the touch sensor (311) based on the first power, identify a state of the control circuitry (312); and
based on identifying that the state of the control circuitry (312) is a defined state, scan at least one of the first portion of the touch sensor (311) and the second portion of the touch sensor (311) by providing third power lower than the second power to at least one of the first channel region (311a-1), the second channel region (311a-2), the third channel region (311a-3), and the plurality of second channels (311b).

14. The electronic device (101) of any one of claims 1 to 13, further comprising:
a sensor (320); and
a processor (120), operably coupled to the sensor (320), configured to:
based on the first value being lower than the first reference value (610) and an angle of the electronic device (101) using the sensor (320) being within a defined angle range, identify whether recognizing the second contact as the touch input in accordance with the first touch sensitivity.

15. The electronic device (101) of any one of claims 1 to 14, further comprising:
a battery (330); and
a processor (120), operably coupled to the battery (330), configured to:
while the battery (330) is charged, based on the first value being lower than the first reference value (610), identify whether recognizing the second contact as the touch input in accordance with a third touch sensitivity lower than the first touch sensitivity.
